# EUROPÄISCHE PATENTANMELDUNG

(11) **EP 0 921 476 A1**
(43) Veröffentlichungstag der Anmeldung: **09.06.1999**
(21) Anmeldenummer: 98250411.0
(22) Anmeldetag: 24.11.1998
(51) Int. Cl.: G06F 15/02

(54) **Kalkulator**

(30) Priorität: 24.11.1997 DE 19754339
(71) Anmelder: Fimor S.A., 72058 Le Mans, Cedex 2 (FR)
(72) Erfinder: Zuckerman, Alex, 72550 La Quinte (FR)
(74) Vertreter: Christiansen, Henning, Dipl.-Ing.

(57) **Zusammenfassung**

Kalkulator mit einer Initialisierungseinrichtung (5) sowie Eingabeeinrichtungen (1), einer Verarbeitungseinheit (2) zur Verarbeitung der Eingabesignale und Steuerung der Ausgabe mittels eines Ausgabedisplays (3) und einem Informationsspeicher (4, 4', 4''), wobei die Verarbeitungseinheit (2) eine Baugruppe (6) zur Durchführung von Berechnungen und eine Ausgabesteuerung (2.1) umfaßt, die sowohl mit dem Informationsspeicher (4, 4', 4'') als auch mit dem Ausgabedisplay (3) verbunden ist, wobei Mittel zur Erfassung einer Betätigung der Initialisierungseinrichtung (5) und Mittel zu Erfassung einer Betätigung der Eingabeeinrichtungen (1) vorgesehen sind, die Ausgabesteuerung (2.1) bei Betätigung der Initialisierungseinrichtung (5) eine entsprechende Information auf dem Ausgabedisplay (3) darstellt, und wobei die Ausgabesteuerung (2.1) eine Zeitsteuerung (11) umfaßt, die nach Ablauf einer vorgebbaren Zeitspanne seit der letzten Betätigung der Eingabeeinrichtungen (1) oder der Initialisierungseinrichtung (5) in Abhängigkeit vom Zustand der Baugruppe (6) in dem Informationsspeicher (4, 4', 4'') gehaltene Informationen auf dem Ausgabedisplay (3) darstellt.

## Beschreibung

Die Erfindung betrifft einen Kalkulator gemäß dem Oberbegriff des Anspruchs 1.

Es ist eine Vielzahl derartiger einfacher Kalkulatoren, insbesondere Taschenkalkulatoren bekannt, welche die Durchführung einfacher Berechnungen des täglichen Lebens ermöglichen. Es besteht auch ein großer Bedarf an solchen einfachen Taschenrechnern. So ist beispielsweise mit der Einführung einer einheitlichen Währung in Europa wenigstens in der Übergangsphase ein einfacher Taschenrechner gefragt, der einfach und schnell Umrechnungen von der bisherigen gewohnten Währung in die neue Währung und umgekehrt Wechselkursen ermöglicht.

Im Zusammenhang mit dieser Problematik sind beispielsweise aus dem deutschen Gebrauchsmuster 297 02 500 und der deutschen Offenlegungsschrift 36 16 748 A1 Taschenrechner bekannt, bei denen ein Mikroprozessor auf Knopfdruck des Benutzers einen zuvor eingegebenen Währungsbetrag umrechnet und das Ergebnis auf einem Display ausgibt.

Diese bekannten Kalkulatoren weisen jedoch alle den Nachteil auf, daß sie selbst für Personen, die mit dem Umgang mit derartigen Geräten vertraut sind, nicht ohne weiteres zu bedienen sind. So muß beispielsweise zunächst die Umrechnungsrichtung von der einen Währung in die andere Währung ausgewählt werden, bevor die korrekte Umrechnung erfolgen kann. Hierbei sind aber Fehler und Mißverständnisse bei einem Teil der Benutzer mit den bekannten Geräten kaum zu vermeiden. Insbesondere Benutzer, die mit derartigen Geräten nicht vertraut sind, sehen sich hierbei mit großen Problemen konfrontiert. Weitere Probleme ergeben sich, wenn wie bei aus der deutschen Offenlegungsschrift 36 16 748 A1 bekannten Taschenrechner zusätzlich Tasten mit Mehrfachfunktionen belegt sind oder sogar noch die Umrechnungsfaktoren einprogrammiert werden müssen.

Ein weiterer Nachteil der bekannten Taschenrechner liegt darin, daß sie relativ aufwendig in Konstruktion und Herstellung sind.

Der Erfindung liegt deshalb die Aufgabe zugrunde, einen möglichst kostengünstig herzustellenden und auch für Ungeübte einfach zu bedienenden Kalkulator zur Verfügung zu stellen.

Die Aufgabe wird, ausgehend von einer Vorrichtung gemäß dem Oberbegriff des Anspruchs 1, durch die im kennzeichnenden Teil des Anspruchs 1 angegebenen Merkmale gelöst.

Die Erfindung schließt die Erkenntnis ein, daß man einen auch für Ungeübte besonders einfach zu bedienenden Kalkulator erhält, wenn dieser so ausgebildet ist, daß er sowohl beim Einschalten als auch nach einer bestimmten Zeitspanne ohne Betätigung irgendwelcher Tasten o. ä. in Abhängigkeit vom Betriebszustand der Baugruppe zur Durchführung der Berechnungen Informationen auf seinem Ausgabedisplay ausgibt, die dem Benutzer Hinweise über die weiteren durchzuführenden Bedienungsschritte liefern. Selbst ungeübte Benutzer können das Gerät dann ohne weitere Einführung benutzen.

Entsprechend können auch andere Informationen - wie Werbebotschaften oder dergleichen - in Zuordnung zu den Betätigungen des Benutzers abgerufen werden. Damit lassen sich Mitteilungen initiieren, welch immer nur in ganz bestimmten Situationen erzeugt werden. Damit können als Initialmeldungen unterschieden werden von Meldungen während der Eingabe etc., oder aber auch Werbebotschaften zwischen Bedienungshinweisen eingestreut werden, so daß hier eine Gleichförmigkeit vermieden wird und der Benutzer durch die gebotenen Abwechslung und den Situationsbezug der Meldungen aufnahmebereit bleibt.

Hierzu umfaßt die Initialisierungseinrichtung erfindungsgemäß mit der Ausgabesteuerung verbundene Mittel zur Erfassung einer Betätigung der Initialisierungseinrichtung und die Eingabeeinrichtungen umfassen mit der Ausgabesteuerung verbundene Mittel zu Erfassung einer Betätigung der Eingabeeinrichtungen. Die Ausgabesteuerung verbindet in Abhängigkeit vom Zustand der Mittel zu Erfassung einer Betätigung der Eingabeeinrichtungen und der Mittel zur Erfassung einer Betätigung der Initialisierungseinrichtung die Baugruppe oder den Informationsspeicher mit dem Ausgabedisplay, wobei die Ausgabesteuerung bei Betätigung der Initialisierungseinrichtung den Informationsspeicher mit dem Ausgabedisplay verbindet und eine entsprechende im Informationsspeicher gehaltene Information auf dem Ausgabedisplay darstellt. Hierdurch ist in schaltungstechnisch besonders einfacher Weise sichergestellt, daß beim Einschalten des Kalkulators eine entsprechende Information aus dem Ausgabedisplay ausgegeben wird. Diese kann dem Benutzer dann den oder die nächsten durchzuführenden Schritte mitteilen, so daß dieser ohne Probleme das gewünschte Ziel erreichen kann.

Weiterhin umfaßt die Ausgabesteuerung erfindungsgemäß eine Zeitsteuerung, die mit den Mitteln zu Erfassung einer Betätigung der Eingabeeinrichtungen und den Mitteln zur Erfassung einer Betätigung der Initialisierungseinrichtung sowie mit der Baugruppe verbunden ist. Die Zeitsteuerung ist dabei derart ausgebildet, daß die Ausgabesteuerung nach Ablauf einer vorgebbaren Zeitspanne seit der letzten Betätigung der Eingabeeinrichtungen oder der Initialisierungseinrichtung gesteuert von der Zeitsteuerung den Informationsspeicher mit dem Ausgabedisplay verbindet und in Abhängigkeit vom Zustand der Baugruppe in dem Informationsspeicher gehaltene Informationen auf dem Ausgabedisplay darstellt. Der Betriebszustand der Baugruppe bestimmt sich dabei danach, ob der Benutzer bereits über die Eingabeeinrichtungen bereits Zahlen eingegeben hat oder ob bereits eine Umrechnung durchgeführt wurde, es können aber auch noch weitere Betriebsparameter herangezogen werden, welche die Ausgabe entsprechender Informationen bedingen. Diese Informationen können dann beispielsweise Hinweise enthalten, was der Benutzer als nächstes zu tun hat oder welche weiteren Möglichkeiten der Benutzung des Kalkulators bestehen.

Der erfindungsgemäße Kalkulator zeichnet sich durch seinen besonders einfachen Aufbau aus, der eine sehr kostengünstige Herstellung ermöglicht.

Bei besonders vorteilhaften Ausführungen der Erfindung ist der Kalkulator als schaltungstechnisch besonders einfach aufgebauter Währungsumrechner ausgebildet. Hierzu ist die Baugruppe zur Durchführung von Umrechnungen eines Geldbetrags in einer ersten Währung in eine zweite Währung bzw. umgekehrt ausgebildet. Sie umfaßt dabei einen mit den Eingabeeinrichtungen verbundenen Eingangspufferspeicher, eine mit dem Eingangspufferspeicher verbundene Recheneinheit, einen mit der Recheneinheit verbundenen Ausgangspufferspeicher sowie einen mit der Recheneinheit verbundenen Konstantenspeicher. Sowohl der Eingangspufferspeicher als auch der Ausgangspufferspeicher sind mit der Ausgabesteuerung verbunden. Die Eingabeeinrichtungen umfassen eine mit dem Eingangspufferspeicher verbundene Zahlentastatur, ein zum Starten des Umrechnungsvorgangs und mindestens eine Auswahleinrichtung zur Auswahl der Umrechnungsrichtung von der ersten Währung in die zweite bzw. umgekehrt. Die Recheneinheit greift dabei gesteuert von dem Betätigungselement über eine mit dem Ausgang der Auswahleinrichtung verbundene, in Abhängigkeit vom Zustand einer am Ausgang der Auswahleinrichtung vorgesehenen Auswahlschaltung auf eine in dem Konstantenspeicher vorhandene erste Umrechnungskonstante (C₁) oder zweite Umrechnungskonstante (C₂) zu, wobei die zweite Umrechnungskonstante den Kehrwert der ersten bildet, multipliziert den Inhalt des Eingangspufferspeichers mit dieser Umrechnungskonstante (C₁) oder (C₂) und legt den Ergebniswert im Ausgangspufferspeicher ab.

Die weiteren Vorteile einer derart einfach aufgebauten und daher besonders vorteilhaften Baugruppe sind in der von derselben Anmelderin eingereichten deutschen Patentanmeldung mit dem Aktenzeichen 194 25 924.3 offenbart.

Bei bevorzugten Weiterbildungen der Erfindung umfassen die Mittel zu Erfassung einer Betätigung der Eingabeeinrichtungen eine Einrichtung zur Erfassung einer Betätigung der Zahlentastatur. Weiterhin ist die Zeitsteuerung wenigstens mit der Einrichtung zur Erfassung einer Betätigung der Zahlentastatur und dem Betätigungselement verbunden. Der Betriebszustand der Baugruppe zur Durchführung der Umrechnungen wird dabei in besonders einfacher Weise erfaßt. Wurden bereits Zahlen über die Tastatur eingegeben, so wird dies von Einrichtung zur Erfassung einer Betätigung der Zahlentastatur detektiert. Wurde dabei das Betätigungselement noch nicht betätigt, wurde noch keine Berechnung durchgeführt, woraus sich ergibt, daß der Benutzer entweder die eingegebene Zahl noch vervollständigen muß oder die Berechnung durch das auslösen muß. Wurde das Betätigungselement bereits betätigt, muß der Benutzer eine neue Zahl für eine Umrechnung eingeben. Die Ausgabesteuerung ist bei diesen vorteilhaften Ausführungen so ausgebildet, daß sie gesteuert von der Zeitsteuerung in Abhängigkeit von einer Betätigung der Zahlentastatur bzw. des getätigungselements entsprechende in dem Informationsspeicher gehaltene Informationen auf dem Ausgabedisplay darstellt. Somit wird in besonders einfacher Weise eine Darstellung von Informationen in Abhängigkeit vom Betriebszustand der Baugruppe zur Durchführung der Umrechnungen erzielt.

Bei günstigen Weiterbildungen des erfindungsgemäßen Kalkulators umfaßt die Zeitsteuerung einen Zähler, dessen Rücksetzeingang zum Rücksetzen des Zählers bei jeder Betätigung der Initialisierungseinrichtung oder der Eingabeeinrichtungen mit den Mitteln zur Erfassung einer Betätigung der Eingabeeinrichtungen und den Mitteln zur Erfassung einer Betätigung der Initialisierungseinrichtung verbunden ist und der derart ausgebildet ist, daß die Zeitspanne durch Auswahl einer bestimmten Anzahl von Zählschritten vorgebbar ist. Hierdurch ist die Zeitsteuerung in vorteilhafter Weise besonders einfach aufgebaut, was sich günstig auf den Herstellungsaufwand und die Kosten des erfindungsgemäßen Kalkulators auswirkt.

Vorzugsweise ist die Einrichtung zur Erfassung einer Betätigung der Zahlentastatur derart mit der Ausgabesteuerung verbunden und ausgebildet ist, daß die Ausgabesteuerung bei Betätigung der Zahlentastatur die Baugruppe mit dem Ausgabedisplay verbindet. Die Zahleneingabe und die Ergebnisse der Umrechnung, also die Ausgabesignale der Baugruppe, werden dann in günstiger Weise unmittelbar auf dem Ausgabedisplay dargestellt.

Weiterhin umfassen die Mittel zu Erfassung einer Betätigung der Eingabeeinrichtungen bei vorteilhaften Ausführungen der Erfindung eine Einrichtung zur Erfassung einer Betätigung der Auswahleinrichtung, die derart mit der Ausgabesteuerung verbunden und ausgebildet ist, daß die Ausgabesteuerung bei Betätigung der Auswahleinrichtung die Baugruppe mit dem Ausgabedisplay verbindet. Sobald also die Umrechnungsrichtung ausgewählt wurde erscheint sofort das Zahlenfeld zur Ein- bzw. Ausgabe der Umrechnungswerte aus dem Ausgabedisplay.

Bei anderen vorteilhaften Varianten ist die Einrichtung zur Erfassung einer Betätigung der Auswahleinrichtung derart mit der Ausgabesteuerung verbunden und ausgebildet, daß die Ausgabesteuerung bei Betätigung der Auswahleinrichtung den Informationsspeicher mit dem Ausgabedisplay verbindet und wenigstens eine der ausgewählten Umrechnungsrichtung entsprechende, in dem Informationsspeicher gehaltene erste oder zweite Information auf dem Ausgabedisplay darstellt. Hierbei kann dem Benutzer dann in vorteilhafter Weise z.B. ein Hinweis auf dem Ausgabedisplay ausgegeben, welche Umrechnungsrichtung bzw. welche Ausgangswährung er ausgewählt hat o. ä. Vorzugsweise ist das Ausgabedisplay dabei als Matrix-Display zur Ausgabe von Textbotschaften ausgebildet, um besonders einfach zu verstehende, Mißverständnisse vermeidende Informationen ausgeben zu können. Die Bedienung bzw. die Benutzerführung wird hierdurch noch einfacher und ergonomischer. Das Matrix-Display ist dabei vorzugsweise als 5×7- oder als 5×9-Punkt-Matrix-Display ausgebildet, mit denen sich in besonders günstiger, weil einfacher und kostengünstiger Weise deutlich lesbare Textbotschaften ausgeben lassen.

Bei bevorzugten Ausführungen des erfindungsgemäßen Kalkulators umfaßt die Ausgabesteuerung zur Darstellung der in dem Informationsspeicher enthaltenen, einer erfolgten Betätigung der Initialisierungseinrichtung entsprechenden Information auf dem Ausgabedisplay erste Adressiereinrichtungen, die über einen Umschalter mit dem Informationsspeicher verbindbar sind und bei Verbindung mit dem Informationsspeicher die entsprechende Information auf dem Ausgabedisplay darstellen. Der Umschalter weist dabei einen ersten und zweiten Eingang, einen Ausgang sowie wenigstens einen ersten Schalteingang auf. Der erste Schalteingang des Umschalters ist dabei mit den Mitteln zur Erfassung einer Betätigung der Initialisierungseinrichtung verbunden und der Umschalter ist derart ausgebildet, daß bei Betätigung der Initialisierungseinrichtung der Eingang des Umschalters, mit dem der Ausgang der ersten Adressiereinrichtungen verbunden ist, mit dem Ausgang des Umschalters verbunden ist. Hierdurch wird mit einer besonders einfachen elektronischen Schaltung die Ausgabe einer Information beim Einschalten des Kalkulators bewirkt. Diese Information kann dann, wie bereits oben erwähnt einen Bedienungshinweis für den Benutzer enthalten, um ihm die Benutzung des Kalkulators zu erleichtern.

Bei besonders günstigen, weil einfach aufgebauten Varianten der Erfindung umfaßt die Zeitsteuerung zur Darstellung der in dem Informationsspeicher enthaltenen, durch die Zeitsteuerung ausgelösten, dem Zustand der Baugruppe entsprechenden Informationen auf dem Ausgabedisplay zweite Adressiereinrichtungen, die über den Umschalter mit dem Informationsspeicher verbindbar sind und bei Verbindung mit dem Informationsspeicher die entsprechende Information auf dem Ausgabedisplay darstellen. Der Zähler der Zeitsteuerung weist dabei einen mit dem zweiten Schalteingang des Umschalters verbundenen Ausgang auf und ist derart ausgebildet ist, daß an dem Ausgang bei Erreichen der vorgegebenen Anzahl von Zählschritten ein Schaltimpuls anliegt. Der Umschalter ist dann derart ausgebildet, daß bei Anliegen des Schaltimpulses am Ausgang des Zählers der Eingang des Umschalters, mit dem der Ausgang der zweiten Adressiereinrichtungen verbunden ist, mit dem Ausgang des Umschalters verbunden ist, wodurch nach Ablauf einer bestimmbaren Zeitspanne ohne Betätigung der Eingabeeinrichtungen oder der Initialisierungseinrichtungen auf besonders unkomplizierte Art eine Darstellung entsprechender Informationen auf dem Ausgabedisplay erfolgt.

Vorzugsweise umfassen die zweiten Adressiereinrichtungen eine erste Adressiereinheit und eine zweite Adressiereinheit, die über einen Wahlschalter mit dem Informationsspeicher verbindbar sind, wobei der erste Schalteingang des Wahlschalters mit der Einrichtung zur Erfassung einer Betätigung der Zahlentastatur und der zweite Schalteingang des Wahlschalters mit dem Betätigungselement verbunden ist. Der Wahlschalter ist in diesem Fall derart ausgebildet, daß er in Abhängigkeit von einer Betätigung der Zahlentastatur bzw. des Betätigungselements, also auch in Abhängigkeit vom Zustand der Baugruppe zur Durchführung der Umrechnung, zur Darstellung entsprechender im Informationsspeicher enthaltener Informationen die erste oder zweite Adressiereinheit mit dem Ausgang der Adressiereinrichtungen verbindet. Diese Informationen enthalten dann beispielsweise einen Hinweis, ob der Benutzer die eingegebene Zahl vervollständigen bzw. die Umrechnung auslösen muß oder ob er eine neue Zahl eingeben muß. Die vorteilhafte Benutzerführung über das Ausgabedisplay wird hierdurch auf besonders einfache Art realisiert und weiter ausgebaut.

Vorzugsweise verbindet der Wahlschalter bei einer Betätigung der Zahlentastatur die erste Adressiereinheit mit dem Ausgang der Adressiereinrichtungen und bei einer Betätigung des Betätigungselements die zweite Adressiereinheit mit dem Ausgang der Adressiereinrichtungen. Die Ausgabesteuerung gibt dann bei Verbindung der ersten Adressiereinheit mit dem Informationsspeicher auf dem Ausgabedisplay eine erste Information aus und bei Verbindung der zweiten Adressiereinheit mit dem Informationsspeicher eine zweite Information auf dem Ausgabedisplay aus, wobei die erste Information vorzugsweise einen Hinweis enthält, daß die Zahleneingabe zu vervollständigen ist oder das Betätigungselement zu betätigen ist, um die Umrechnung zu vollziehen, und die zweite Information einen Hinweis enthält, daß eine neue Zahl einzugeben ist.

Es versteht sich, daß einzelne aber auch alle der genannten Adressierer sowohl als statische als auch als zyklische Adressierer ausgebildet sein können, die dann wiederkehrend bestimmte in dem Informationsspeicher gehaltene Informationen auf dem Ausgabedisplay darstellen. Hierbei ist dann nicht nur die Ausgabe von Bedienungshinweisen möglich, sondern in vorteilhafter Weise auch die Ausgabe von weiteren Informationen, insbesondere Werbebotschaften o.ä., wobei die Bedienungshinweise allerdings vorzugsweise Priorität gegenüber derartigen weiteren Informationen besitzen. Hierzu kann beispielsweise zwischen jeweils 2 Werbebotschaften der entsprechende Bedienungshinweis auf dem Ausgabedisplay ausgegeben werden.

Bei besonders vorteilhaften Ausführungen ist der erfindungsgemäße Kalkulator von einer Datenverarbeitungsanlage gebildet, die eine mit einer Eingabevorrichtung, einem Datenspeicher und einer Ausgabevorrichtung verbundene zentrale Verarbeitungsvorrichtung umfaßt. Die Ausgabevorrichtung bildet dann das Ausgabedisplay, der Datenspeicher umfaßt den Informationsspeicher und die Elemente der Verarbeitungseinheit sind in Form wenigstens eines Datenverarbeitungsprogrammes im Datenspeicher gespeichert, auf das die zentrale Verarbeitungsvorrichtung dann zur Ausführung der Funktionen der Verarbeitungseinheit zugreift. Hierdurch werden die Funktionen des Kalkulators in einfacher Weise in Form eines Datenverarbeitungsprogrammes realisiert, so daß der Kalkulator auch in Verbindung mit beliebigen derartigen elektronischen Datenverarbeitungsgeräten oder -anlagen, beispielsweise Personalcomputern, elektronischen Taschendatenbanken etc., einsetzbar ist, sofern diese nur die Möglichkeit besitzen das Datenverarbeitungsprogramm in ihrem Datenspeicher zu speichern.

Bei günstigen Weiterbildungen der Erfindung ist eine Schnittstelle vorgesehen, über die der Datenspeicher mit einem Datennetz- oder Datenfunksystem verbindbar ist. Der Datenspeicher ist dann derart ausgebildet, daß die im Datenspeicher gehaltenen Informationen gesteuert von der zentralen Verarbeitungsvorrichtung durch über das Datennetz- oder Datenfunksystem abrufbare Informationen ersetzbar sind. So ist in einfacher Weise eine ständige Aktualisierung des Inhaltes des Datenspeichers möglich. Bei dem Datennetz- oder Datenfunksystem handelt es sich dabei um ein beliebiges Rechnernetz, wie insbesondere das Internet. Vorzugsweise sind dabei die im Informationsspeicher gehaltenen Informationen ersetzbar, die keinen Hinweis über den Zustand der Baugruppe zur Durchführung der Umrechnung bilden. Hierdurch wird erreicht, daß die in Abhängigkeit vom Zustand der Baugruppe ausgegebenen Bedienungshinweise unverändert bleiben, während die weiteren Informationen, beispielsweise Werbebotschaften oder dergleichen, die zwischen den Bedienungshinweisen auf dem Ausgabedisplay ausgegeben werden aktualisiert werden können.

Zusätzlich oder alternativ sind die in dem Bereich des Datenspeichers, der den Konstantenspeicher bildet, gehaltenen Umrechnungskonstanten (C₁, C₂) ersetzbar. So kann in einfacher Weise über das Datennetz- oder Datenfunksystem der aktuelle Umrechnungskurs für zwei Devisen, zwischen denen umgerechnet werden soll, importiert werden.

Bei besonders günstigen Varianten der Erfindung ist das Datenverarbeitungsprogramm über das Datennetz- oder Datenfunksystem abrufbar und nach Art eines Java- oder ActiveX-Applets ausgebildet, so daß es von anderen Benutzern über das Datennetz- oder Datenfunksystem genutzt werden kann.

Bei weiteren vorteilhaften Ausführungen der Erfindung umfaßt das Datenverarbeitungsprogramm wenigstens ein Unterprogramm, das derart ausgebildet ist, daß es gesteuert von der zentralen Verarbeitungsvorrichtung nach Art eines Filters auf zu Dateien zusammengefaßte Speicherbereiche im Datenspeicher zugreift und die darin gehaltenen Informationen mit dem Format der ersten bzw. zweiten Währung vergleicht. Entspricht der Inhalt von Speicherbereichen der jeweiligen Datei dem Format der ersten bzw. zweiten Währung, überträgt es den Inhalt jeweils in den Eingangspufferspeicher, wobei es die Auswahlschaltung entsprechend dem Format des Speicherbereichs schaltet, d. h. die entsprechende Umrechnungsrichtung festlegt. Der Inhalt des Speicherbereichs wird anschließend durch den Inhalt des Ausgangspufferspeichers ersetzt. Hierdurch ist es in einfacher Weise möglich, einer Datei nach darin abgelegten Zahlenwerten, beispielsweise eines bestimmten Währungsformates, zu durchsuchen, diese in eine Zielwährung umzurechnen und dann den Ausgangswert durch den Zahlenwert in der Zielwährung, einschließlich des entsprechenden Zielwährungsformates in der Datei zu ersetzen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: das Blockschaltbild eines bevorzugten Ausführungsbeispiels der Erfindung,
- Figur 2: das Blockschaltbild eines weiteren bevorzugten Ausführungsbeispiels der Erfindung,
- Figur 3: das Blockschaltbild einer bevorzugten Ausführung eines Teils des Informationsspeichers,
- Figur 4: das Blockschaltbild einer weiteren bevorzugten Ausführung eines Teils des Informationsspeichers,
- Figur 5: das Blockschaltbild eines anderen bevorzugten Ausführungsbeispiels der Erfindung,
- Figur 6: das Blockschaltbild eines weiteren bevorzugten Ausführungsbeispiels der Erfindung.

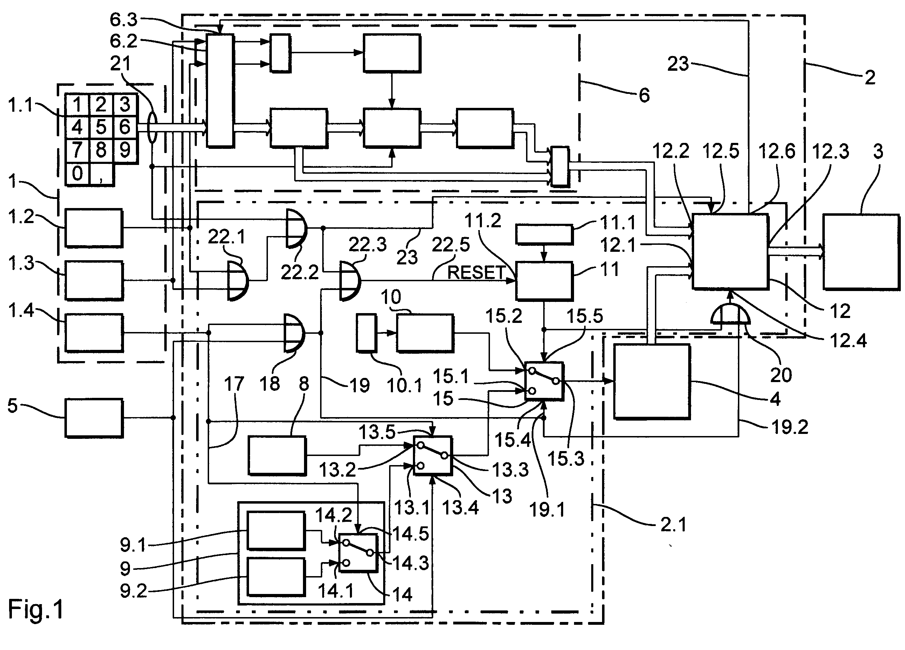

Figur 1 zeigt ein Blockschaltbild einer als Währungsumrechner ausgebildeten Ausführung des erfindungsgemäßen elektronischen Gerätes. Eingabeeinrichtungen 1 sind mit einer Verarbeitungseinheit 2 verbunden, die zur Verarbeitung der Eingabesignale und Steuerung der Ausgabe auf dem mit der Verarbeitungseinheit verbundenen Ausgabedisplay 3 dient. Mit der Verarbeitungseinheit 2 ist ein Informationsspeicher 4 verbunden. Eine Initialisierungseinrichtung 5 zum Einschalten des Gerätes ist ebenfalls mit der Verarbeitungseinheit 2 verbunden. Abhängig vom Betriebszustand des Gerätes, also beispielsweise abhängig von der erfolgten Betätigung der Initialisierungseinrichtung 5 oder der Eingabeeinrichtungen 1, stellt die Verarbeitungseinheit 2 im Informationsspeicher 4 gespeicherte Daten oder Ergebnisse der Währungsumrechnung auf dem Ausgabedisplay 7 dar. Insbesondere ist eine Auslöseeinrichtung 1.4 vorgesehen, deren Betätigung die Ausgabe einer im Informationsspeicher 4 gespeicherten Zusatzinformation auf dem Ausgabedisplay 7 bewirkt. Diese Zusatzinformation enthält beispielsweise einen bestimmten Werbehinweis oder einen Hinweis, daß man sich bei einer bestimmten Stelle unter Vorlage des Gerätes einen bestimmten Gewinn abholen kann.

Die Verarbeitungseinheit 2 umfaßt eine Umrechnungsbaugruppe 6 zur Durchführung einer Währungsumrechnung und eine damit verbundene Ausgabesteuerung 7. Die Umrechnungsbaugruppe 6 entspricht dabei einer der Baugruppen zur Durchführung der Währungsumrechnung, die in der von derselben Anmelderin eingereichten deutschen Patentanmeldung mit dem Aktenzeichen 194 25 924.3 offenbart sind.

Die Eingabeeinrichtungen 1 umfassen eine Tastatur 1.1 mit den Ziffern von 0 bis 9, wie sie beispielsweise von Taschenrechnern her bekannt ist, sie kann aber auch nach Art einer Telefontastatur angeordnet sein. Derartige Tastaturen können in bekannter Weise als Gummitastatur oder im Hinblick auf möglichst geringe Baugröße und wirtschaftliche Herstellbarkeit zweckmäßigerweise als Folientastatur ausgebildet sein. Weiterhin umfassen die Eingabeeinrichtungen 1 eine erste Auswahleinrichtung 1.2 und eine zweite Auswahleinrichtung 1.3, die zur Auswahl derjenigen Währung dienen, welche die Ausgangswährung darstellt und von der in die Zielwährung umgerechnet werden soll. Die Tastatur 1.1 sowie die erste und zweite Auswahleinrichtung 1.2 und 1.3 sind mit der Umrechnungsbaugruppe 6 verbunden. Je nachdem, welche der beiden Auswahleinrichtungen 1.2 und 1.3 betätigt wurde, rechnet die Umrechnungsbaugruppe 6 einen über die Tastatur 1.1 eingegebenen Zahlenwert in die ausgewählte Zielwährung um. Der eingegebene Zahlenwert und das Ergebnis der Umrechnung werden über die Ausgabesteuerung 7 auf dem Ausgabedisplay 3 dargestellt.

Die Ausgabesteuerung 7 umfaßt einen ersten Adressierer 8, Adressiereinrichtungen 9 mit einem zweiten und dritten Adressierer 9.1 und 9.2, einen mit einem Taktgeber 10.1 verbundenen, zyklischen dritten Adressierer 10, einen mit einem Taktgeber 11.1 verbundenen Zähler 11 und einen schaltbare Steuerbaugruppe 12. Die Ausgänge des ersten Adressierers 8 und der Adressiereinrichtungen 9 sind mit dem ersten bzw. zweiten Eingang 13.1 bzw. 13.2 eines ersten Umschalters 13 verbunden. Der Ausgang der Adressiereinrichtungen 9 ist dabei vom Ausgang 14.3 eines zweiten Umschalters gebildet, mit dessen erstem bzw. zweitem Eingang 14.1 bzw. 14.2 der Ausgang des zweiten bzw. dritten Adressierers 9.1 bzw. 9.2 verbunden ist.

Der Ausgang 13.3 des ersten Umschalters 13 ist wiederum mit dem ersten Eingang 15.1 eines dritten Umschalters 15 verbunden. Der zweite Eingang 15.2 des dritten Umschalters 15 ist mit dem Ausgang des dritten Adressierers 10 verbunden, während der Ausgang 14.3 des dritten Umschalters 14 mit dem Informationsspeicher 4 verbunden ist.

Der Informationsspeicher 4 ist mit dem ersten Eingang 12.1 der schaltbare Steuerbaugruppe 12 verbunden, deren Ausgang 12.3 wiederum am Eingang des Ausgabedisplays 3 anliegt. Der zweite Eingang 12.2 der Steuerbaugruppe 12 ist mit dem Ausgang der Umrechnungsbaugruppe 6 verknüpft. Je nachdem, welcher der beiden Eingänge 12.1 oder 12.2 der schaltbaren Steuerbaugruppe 12 mit deren Ausgang 12.3 verbunden ist, werden die Ausgabesignale der Umrechnungsbaugruppe 6 oder im Informationsspeicher 4 gespeicherte Informationen auf dem Ausgabedisplay 3 dargestellt.

Bei dem Ausgabedisplay handelt es sich im gezeigten Beispiel um ein Matrix-Display, das auch zur Ausgabe von Textbotschaften geeignet ist. Das Matrix-Display ist dabei als 5×7-Punkt-Matrix-Display ausgebildet, auf dem die Textbotschaften in Großbuchstaben ausgegeben werden. Es kann sich dabei aber beispielsweise auch um ein 5×9-Punkt-Matrix-Display handeln, auf dem dann Groß- und Kleinbuchstaben ausgegeben werden können

Ist der erste Eingang 12.1 der Steuerbaugruppe 12 auf deren Ausgang 12.3 geschaltet, so werden auf dem Ausgabedisplay 3 je nachdem, welcher der genannten Adressierer 8, 9.1, 9.2 oder 10 mit dem Informationsspeicher 4 verbunden ist, unterschiedliche in dem Informationsspeicher 4 enthaltene Informationen dargestellt. Vorzugsweise geschieht dies in Form von Textbotschaften.

Ist der erste Adressierer 8 mit dem Informationsspeicher 4 verbunden, so wird auf dem Ausgabedisplay 3 eine Zusatzinformation dargestellt. Diese Zusatzinformation kann eine besondere Werbebotschaft, wie beispielsweise ein Angebot sein, das sich ausschließlich an den Benutzer des Gerätes richtet. Sie kann aber auch einen Hinweis enthalten, daß sich der Benutzer beispielsweise bei einer bestimmten Stelle unter Vorlage des Gerätes einen bestimmten Gewinn abholen kann. Die Zusatzinformation ist vorzugsweise bei der Herstellung des Gerätes freigebbar oder programmierbar. Sie kann dabei selbstverständlich in Abhängigkeit von dem jeweiligen Abnehmer der Geräte bestimmt werden. Vorzugsweise sind für die Zusatzinformation bestimmte Wertigkeitsniveaus vorgesehen, aus denen dann während der Herstellung des einzelnen Gerätes ein Wertigkeitsniveau für das jeweilige Gerät ausgewählt und festgelegt wird.

Ist der zweite Adressierer 9.1 mit dem Informationsspeicher 4 verbunden, so wird auf dem Ausgabedisplay 3 eine erste Information dargestellt, die einen Hinweis enthält, daß die Zusatzinformation bisher noch nicht erstmals abgefragt wurde. Bei Verbindung des dritten Adressierers 9.2 mit dem Informationsspeicher 4 wird hingegen auf dem Ausgabedisplay 3 eine zweite Information dargestellt, die einen Hinweis enthält, daß die Zusatzinformation bereits erstmals abgefragt wurde.

Besteht eine Verknüpfung zwischen dem vierten Adressierer 11 und dem Informationsspeicher 4, so werden auf dem Ausgabedisplay 3 aus Teilinformationen, beispielsweise Werbebotschaften, bestehende dritte Informationen dargestellt, wobei die Teilinformationen zyklisch wiederkehren.

Die Anzeige auf dem Ausgabedisplay 3 erfolgt, wie im folgenden beschrieben wird, in Abhängigkeit vom Betriebszustand des Gerätes.

Beim Einschalten des Gerätes, also bei Betätigen der Initialisierungseinrichtung 5, schaltet der erste Umschalter 13 seinen zweiten Eingang 13.2 auf seinen Ausgang 13.3. Hierzu ist der erste Schalteingang 13.4 des ersten Umschalters 13 durch eine Leitung 16 mit dem Ausgang der Initialisierungseinrichtung 5 verbunden. Weiterhin schaltet dabei der dritte Umschalter 15 seinen ersten Eingang 15.1 auf seinen Ausgang 15.3 und die Steuerbaugruppe 12 schaltet ihren ersten Eingang 12.1 auf ihren Ausgang 12.3. Auf dem Ausgabedisplay 3 werden folglich je nach Zustand der Adressiereinrichtung 9 die erste oder zweite Information dargestellt. Im Ursprungszustand des Gerätes, d. h. nach der Fertigstellung des Gerätes, ist der erste Eingang 14.1 des zweiten Umschalters 14 mit seinem Ausgang 14.3 verbunden. In diesem Fall ist der zweite Adressierer 9.1 mit dem Informationsspeicher 4 verbunden und auf dem Ausgabedisplay 3 wird die erste Information dargestellt, die den Hinweis enthält, daß die Zusatzinformation bisher noch nicht erstmals abgefragt wurde. Bei erstmaliger Betätigung der Auslöseeinrichtung 1.4 nach der Herstellung des Gerätes verbindet der zweite Umschalter 14 seinen zweiten Eingang 14.2 mit seinem Ausgang 14.3, so daß in diesem Fall der dritte Adressierer 9.2 mit dem Informationsspeicher 4 verbunden ist und auf dem Ausgabedisplay 3 die zweite Information dargestellt wird, die den Hinweis enthält, daß die Zusatzinformation bereits erstmals abgefragt wurde. Zur Umschaltung ist der Schalteingang 14.4 des zweiten Umschalters durch die Leitung 17 mit dem Ausgang der Auslöseeinrichtung 1.4 verbunden.

Der zweite Umschalter 14 ist so ausgebildet, daß diese Umschaltung irreversibel ist. Die irreversible Umschaltung erfolgt hierbei durch ein einfaches Speicherglied am Schalteingang 14.4 des zweiten Umschalters 14, das den sich bei erstmaligem Eintreffen des Schaltimpulses auftretenden Zustand am Schalteingang 14.4 permanent und unveränderbar speichert. Die Irreversibilität der Umschaltung kann selbstverständlich auch auf andere Weise realisiert sein. So ist es beispielsweise möglich, einen Umschalter vorzusehen, bei dem die Umschaltung bei Eintreffen eines Schaltimpulses ausreichender Energie durch Zerstörung einer galvanischen Verbindung im Umschalter erfolgt. In jedem Fall dient der Umschalter 14 zur Erfassung einer erstmaligen Betätigung der Auslöseeinrichtung und folglich auch zur Erfassung einer bereits erstmalig erfolgten Ausgabe der Zusatzinformation. Durch die Irreversibilität der Umschaltung ist, wie bei einem Los, sichergestellt das der Empfänger des Gerätes unmittelbar feststellen kann, ob der mit dem Gerät verbundene Zusatzinformation bereits schon einmal von einer anderen Person abgefragt wurde. In Anlehnung an das Beispiel des Loses kann er also unmittelbar feststellen, ob das Los unversehrt ist oder nicht, so daß entsprechende Betrugsmöglichkeiten ausgeschlossen sind.

Beim Betätigen der Auslöseeinrichtung 1.4 schaltet weiterhin der erste Umschalter 13 seinen ersten Eingang 13.2 auf seinen Ausgang 13.3. Hierzu ist der zweite Schalteingang 13.5 des ersten Umschalters 13 durch eine Leitung 17 mit dem Ausgang der Auslöseeinrichtung 1.4 verbunden. Weiterhin schaltet dabei der dritte Umschalter 15 seinen ersten Eingang 15.1 auf seinen Ausgang 15.3. Diese Umschaltung des dritten Umschalters 15 erfolgt, wie oben beschrieben, auch bei Betätigung der Initialisierungseinrichtung 5, weshalb hierzu der Ausgang der Initialisierungseinrichtung 5 und der Ausgang der Auslöseeinrichtung 1.4 über eine ODER-Schaltung 18 verknüpft durch die Leitungen 19 und 19.1 mit dem ersten Schalteingang 15.4 des dritten Umschalters 15 verbunden sind. Somit ist der erste Adressierer 8 mit dem Informationsspeicher 4 verbunden. Da auch bei Betätigen der Auslöseeinrichtung 1.4 die Steuerbaugruppe 12 ihren ersten Eingang 12.1 auf ihren Ausgang 12.3 schaltet, wird in diesem Fall die Zusatzinformation auf dem Ausgabedisplay 3 dargestellt.

Der zweite Schalteingang 15.5 des dritten Umschalters 15 ist mit einer Zeitsteuerung verbunden, die von dem durch den Taktgeber 11.1 getakteten Zähler 11 gebildet ist. Erreicht der Zähler 11 eine bestimmte vorgegebene Anzahl (Z) von Zählschritten, legt er an den zweiten Schalteingang 15.5 einen Zustand an, der bewirkt₁ daß der zweite Eingang 15.2 des dritten Umschalters 15 auf dessen Ausgang 15.3 geschaltet wird, wodurch dann der vierte Adressierer 10 mit dem Informationsspeicher verbunden ist. Gleichzeitig schaltet die Steuerbaugruppe 12 ihren ersten Eingang 12.1 auf ihren Ausgang 12.3, so daß in diesem Fall die dritten Informationen auf dem Ausgabedisplay 3 dargestellt werden.

Das Schalten des ersten Eingangs 12.1 der Steuerbaugruppe 12 auf deren Ausgang 12.3 erfolgt nicht nur durch den Zähler 11, sondern, wie oben beschrieben, alternativ ebenfalls bei Betätigen der Initialisierungseinrichtung 5 oder der Auslöseeinrichtung 1.4. Um dies zu gewährleisten, sind die Ausgänge der Initialisierungseinrichtung 5 und der Auslöseeinrichtung 1.4 über die ODER-Schaltung 18 verknüpft, deren Ausgang wiederum über eine ODER-Schaltung 20 mit dem Ausgang des Zählers 11 verknüpft mit dem ersten Schalteingang 12.4 der Steuerbaugruppe 12 verbunden ist.

Die Zeitsteuerung ist so ausgebildet, daß nach Ablauf einer bestimmten Zeitspanne nach der letzten Betätigung der Eingabeeinrichtungen 1 bzw. der Initialisierungseinrichtung 5 die dritten Informationen auf dem Ausgabedisplay dargestellt werden. Dabei sind zur Erfassung einer Betätigung der Tastatur 1.1 Mittel 20 vorgesehen, die im gezeigten Beispiel Bestandteil der Tastatur 1.1 sind und an deren Ausgang bei jeder Betätigung der Tastatur ein entsprechender Zustand anliegt. Um die beschriebene Zeitsteuerung zu realisieren sind die Ausgänge der Mittel 20, der ersten und zweiten Auswahleinrichtung 1.2 und 1.3, der Auslöseeinrichtung 1.4 und der Initialisierungseinrichtung 5 über ODER-Schaltungen 22.1, 22.2, 22.3 und 22.4 verknüpft über die Leitung 22.5 mit dem Rücksetzeingang 11.2 des Zählers 11 verbunden, so daß der Zähler bei Betätigung eines der genannten Elemente auf Null zurückgesetzt wird und von vorne zu Zählen beginnt. Erreicht der Zähler 11 die vorgegebene Anzahl (Z) an Zählschritten, ohne daß eine weitere Betätigung der genannten Elemente erfolgt, werden der dritte Umschalter 15 und die Steuerbaugruppe 12 in der oben beschriebenen Weise umgeschaltet und auf dem Ausgabedisplay 3 die dritten Informationen, beispielsweise Werbebotschaften o. ä., dargestellt.

Erfolgt eine Betätigung der Tastatur 1.1 oder einer der beiden Auswahleinrichtungen 1.2 oder 1.3, so schaltet die Steuerbaugruppe 12 ihren zweiten Eingang 12.2 auf ihren Ausgang 12.3, so daß die am Ausgang 6.1 der Umrechnungsbaugruppe 6 anliegenden Ausgabesignale auf dem Ausgabedisplay 3 dargestellt werden. Hierzu sind die Ausgänge der ersten und Zweiten Auswahleinrichtung 1.2 und 1.3 über die ODER-Schaltung 22.1 verknüpft, deren Ausgang wiederum mit dem Ausgang der Mittel 21 über die ODER-Schaltung 22.2 verknüpft über die Leitung 23 mit dem zweiten Schalteingang 12.5 der Steuerbaugruppe 12 verbunden ist.

Um sicherzustellen, daß bei Betätigung der Tastatur oder einer der beiden Auswahleinrichtungen 1.2 oder 1.3 zur Umschaltung der Steuerbaugruppe 12 noch keine Eingabe in die Umrechnungsbaugruppe 6 erfolgt, ist am Eingang der Umrechnungsbaugruppe 6 eine Schalteinrichtung 6.2 vorgesehen, welche die Eingänge der Umrechnungsbaugruppe 6 in Abhängigkeit vom Schaltzustand der Steuerbaugruppe 12 durchschaltet. Hierzu ist der Schalteingang 6.3 der Schalteinrichtung 6.2 über eine Leitung 23 mit dem Ausgang 12.6 der Steuerbaugruppe 12 verbunden, an dem, vorzugsweise etwas zeitverzögert, ein dem jeweiligen Schaltzustand der Steuerbaugruppe 12 entsprechender Zustand anliegt. Ist beispielsweise der erste Eingang 12.1 der Steuerbaugruppe 12 mit deren Ausgang verbunden, so sperrt die Schalteinrichtung 6.2 die Eingänge der Umrechnungsbaugruppe 6. Bei einer Betätigung der Tastatur oder einer der beiden Auswahleinrichtungen 1.2 oder 1.3 erfolgt dann lediglich eine Umschaltung der Steuerbaugruppe 12 aber keine Eingabe in die Umrechnungsbaugruppe 6. Es versteht sich aber, daß diese Schalteinrichtung 6.2 auch genauso gut nicht vorhanden sein kann.

Wie beschrieben werden auf dem Ausgabedisplay 7 in Abhängigkeit vom Betriebszustand des Gerätes unterschiedliche Informationen dargestellt. So werden beispielsweise beim Einschalten des Gerätes erste oder zweite Informationen dargestellt, die einen entsprechenden Hinweis enthalten, ob die Zusatzinformation bereits erstmals abgelesen wurde oder nicht. Die ersten und zweiten Informationen enthalten aber zweckmäßigerweise auch Bedienungshinweise oder -anweisungen hinsichtlich des oder der nächsten Schritte bei der bestimmungsgemäßen Benutzung des Gerätes, also im beschriebenen Beispiel bei der Durchführung der Währungsumrechnung. Auch die dritten Informationen, die nach Ablauf einer bestimmten vorgegebenen Zeitspanne auf dem Ausgabedisplay dargestellt werden enthalten zweckmäßigerweise derartige Bedienungshinweise.

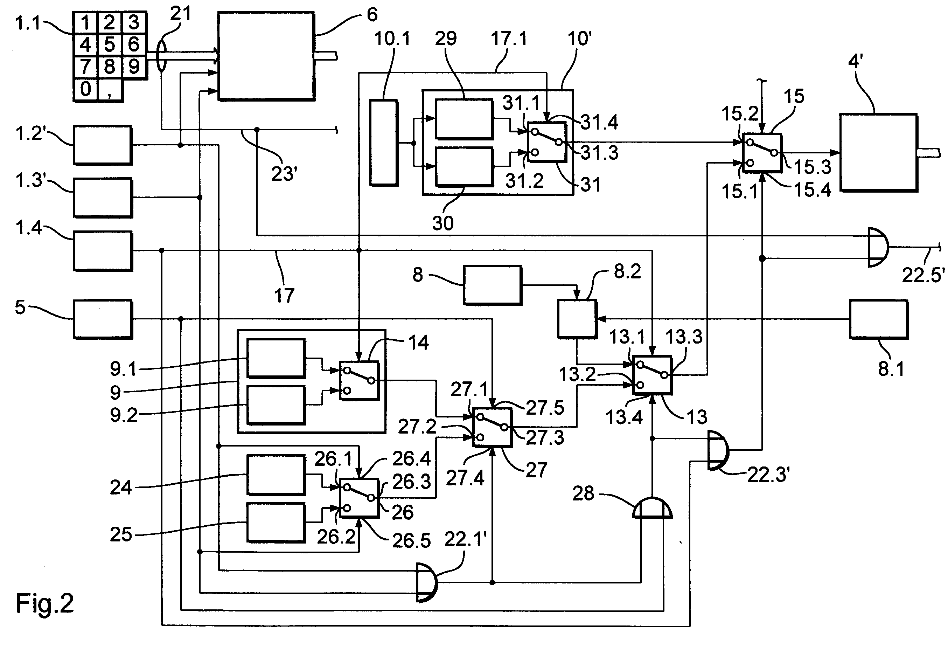

Figur 2 zeigt ein weiteres bevorzugtes Ausführungsbeispiel der Erfindung. Der prinzipielle Aufbau entspricht im wesentlichen dem Aufbau der Ausführung aus Figur 1, so daß hier lediglich die Unterschiede dargestellt werden sollen.

Bei der hier beschriebenen Ausführung enthält der Informationsspeicher 4' zusätzlich zu den zu Figur 1 beschriebenen Informationen noch vierte und fünfte Informationen, die bei Betätigung der ersten und zweiten Auswahleinrichtung 1.2' und 1.3' auf dem Ausgabedisplay ausgegeben werden und eine Bedienungsanweisung enthalten. Eine derartige Bedienungsanweisung könnte beispielsweise bei der Auswahl der Währungsumrechnung von DM in EURO lauten: "Geben Sie den gewünschten DM-Betrag ein!"

Die Ausgabesteuerung umfaßt hierzu zusätzlich zu den zu Figur 1 genannten Elementen einen fünften Adressierer 24 und einen sechsten Adressierer 25, deren Ausgänge mit dem ersten Eingang 26.1 bzw. zweiten Eingang 26.2 eines vierten Umschalters 26 verbunden sind. Der Ausgang 26.3 des vierten Umschalters 26 ist mit dem zweiten Eingang 27.2 eines weiteren, fünften Umschalters 27 verbunden. Am ersten Eingang 27.1 des fünften Umschalters 27 liegt der Ausgang des zweiten Umschalters 14 an und der Ausgang 27.3 des fünften Umschalters 27 ist mit dem zweiten Eingang 13.2 des ersten Umschalters 13 verknüpft.

Bei Betätigung der ersten Auswahleinrichtung 1.2' bzw. der zweiten Auswahleinrichtung 1.3' verbindet der vierte Umschalter 26 seinen ersten Eingang 26.1 bzw. seinen zweiten Eingang 26.2 mit seinem Ausgang 26.3. Hierzu ist der Ausgang der ersten Auswahleinrichtung 1.2' bzw. der Ausgang der zweiten Auswahleinrichtung 1.3' mit dem ersten Schalteingang 26.4 bzw. dem zweiten Schalteingang 26.5 verbunden.

Bei Betätigung einer der beiden Auswahleinrichtungen 1.2' bzw. 1.3' werden weiterhin der zweite Eingang 27.2 des fünften Umschalters 27 mit dessen Ausgang 27.3, der zweite Eingang 13.2 des ersten Umschalters 13 mit dessen Ausgang 13.3 und der zweite Eingang 15.2 des dritten Umschalters 13 mit dessen Ausgang 13.3 verbunden. Hierzu sind die Ausgänge der beiden Auswahleinrichtungen 1.2' und 1.3' über eine ODER-Schaltung 22.1' verknüpft mit dem ersten Schalteingang 27.4 des fünften Umschalters 27, über eine weitere ODER-Schaltung 28 mit dem Ausgang der Initialisierungseinrichtung 5 verknüpft mit dem ersten Schalteingang 13.4 des ersten Umschalters 13 und über eine weitere ODER-Schaltung 22.3' mit dem Ausgang der Auslöseeinrichtung 1.4 verknüpft mit dem ersten Schalteingang 15.4 des dritten Umschalters 15 und mit der Leitung 19.2' verbunden. Die Leitung 19.2' führt dabei zum ersten Schalteingang 12.4 der Steuerbaugruppe 12. Die Betätigung einer der beiden Auswahleinrichtungen 1.2' bzw. 1.3' hat somit zur Folge, daß der fünfte bzw. sechste Adressierer 24 bzw. 25 mit dem Speicher 4 verbunden ist und die Steuerbaugruppe 12 so geschaltet ist, daß die im Informationsspeicher 4' gespeicherte vierte bzw. fünfte Information auf dem Ausgabedisplay dargestellt wird. Die vierte bzw. fünfte Information enthält dabei jeweils einen Hinweis bzw. eine Bedienungsanweisung, die der durch die Betätigung der ersten bzw. zweiten Auswahleinrichtungen 1.2' bzw. 1.3' gewählten Währungsumrechnung entspricht.

Es versteht sich, daß bei dieser Ausführung lediglich der Ausgang der Mittel 21 zur Erfassung einer Betätigung der Tastatur 1.1 über die Leitung 23' mit dem zweiten Schalteingang der Steuerbaugruppe 12 verbunden sind, da nur im Fall einer Betätigung der Tastatur 1.1 die Ausgabesignale der Umrechnungsbaugruppe 6 auf dem Ausgabedisplay dargestellt werden sollen.

Weiterer Unterschied zu der aus Figur 1 bekannten Ausführung besteht darin, daß die dritten Informationen in eine ersten und zweite Informationsgruppe unterteilt sind, wobei die Informationsgruppen in Abhängigkeit von einer bereits erfolgten erstmaligen Ausgabe der Zusatzinformation einen entsprechenden Hinweis auf eine bereits erfolgten erstmaligen Ausgabe der Zusatzinformation enthalten. Wurde die Zusatzinformation also bereits erstmals auf dem Ausgabedisplay ausgegeben, so enthalten die dritten Informationen, die wie zu Figur 1 beschrieben nach Ablauf einer bestimmten Zeitspanne ohne Betätigung der Initialisierungseinrichtung 5 oder der Eingabeeinrichtungen 1 auf dem Ausgabedisplay dargestellt werden, einen Hinweis darauf, daß die Zusatzinformation bereits erstmals auf dem Ausgabedisplay ausgegeben wurde. Ist dies nicht der Fall, so wird ebenfalls ein entsprechender Hinweis ausgegeben.

Hierzu umfaßt der vierte Adressierer 10' einen ersten und zweiten zyklischen Teiladressierer 29 und 30, die beide durch den Taktgeber 10.1 getaktet sind, sowie einen sechsten Umschalter 31. Der Ausgang des ersten bzw. zweiten zyklischen Teiladressierers 29 bzw. 30 ist mit dem ersten bzw. zweiten Eingang 31.1 bzw. 31.2 des sechsten Umschalters 31 verbunden. Der Ausgang 31.3 des sechsten Umschalters 31 bildet den Ausgang des vierten Adressierers 10' und liegt am zweiten Eingang 15.2 des dritten Umschalters 15 an.

Ist der erste Teiladressierer 29 mit dem Informationsspeicher 4' verbunden, so wird bei entsprechender Schaltung der Steuerbaugruppe 12 die erste Informationsgruppe dritten Informationen auf dem Ausgabedisplay dargestellt, die einen Hinweis darauf enthalten, daß die Zusatzinformation bereits erstmals auf dem Ausgabedisplay ausgegeben wurde. Ist hingegen der zweite Teiladressierer 29 mit dem Informationsspeicher 4' verbunden, so wird die zweite Informationsgruppe dritten Informationen auf dem Ausgabedisplay dargestellt, die einen Hinweis darauf enthalten, daß die Zusatzinformation noch nicht erstmals auf dem Ausgabedisplay ausgegeben wurde. Hierzu ist der Schalteingang 31.4 des sechsten Umschalters 31 mit dem Ausgang der Auslöseeinrichtung 1.4 verbunden.

Im Ursprungszustand des Gerätes, d. h. nach der Fertigstellung des Gerätes, ist der zweite Eingang 31.2 des sechsten Umschalters 31 mit seinem Ausgang 31.3 verbunden. In diesem Fall ist der zweite Teiladressierer 29 mit dem Informationsspeicher 4' verbunden und auf dem Ausgabedisplay 3 wird die ggf. die zweite Informationsgruppe dargestellt, die den Hinweis enthält, daß die Zusatzinformation bisher noch nicht erstmals abgefragt wurde. Bei erstmaliger Betätigung der Auslöseeinrichtung 1.4 nach der Herstellung des Gerätes verbindet der sechste Umschalter 31 seinen ersten Eingang 31.1 mit seinem Ausgang 14.3, so daß in diesem Fall der erste Teiladressierer 29 mit dem Informationsspeicher 4' verbunden ist und auf dem Ausgabedisplay die erste Informationsgruppe dargestellt wird, die den Hinweis enthält, daß die Zusatzinformation bereits erstmals abgefragt wurde. Zur Umschaltung ist der Schalteingang 31.4 des sechsten Umschalters durch die Leitung 17.1 mit dem Ausgang der Auslöseeinrichtung 1.4 verbunden. Der sechste Umschalter 31 ist dabei wie der zu Figur 1 beschriebene zweite Umschalter 14 so ausgebildet, daß diese Umschaltung irreversibel ist.

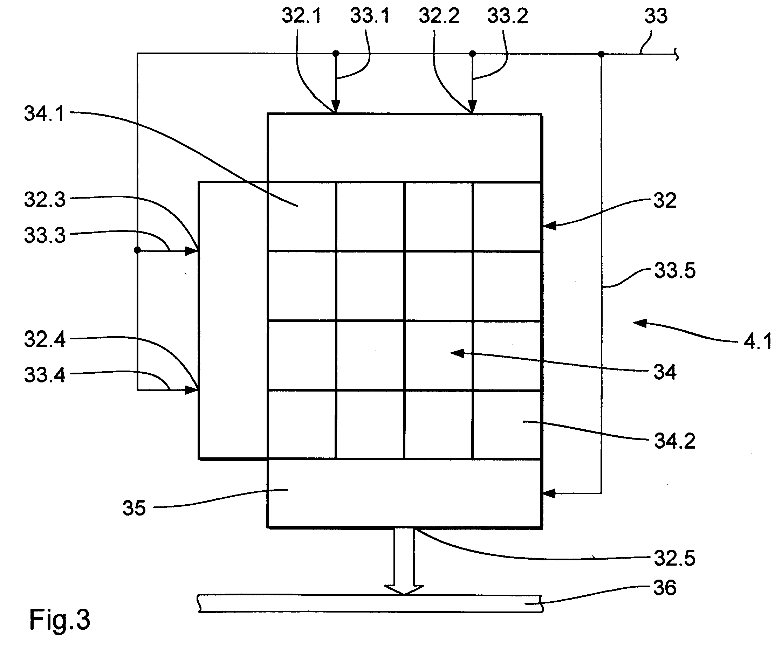

Figur 3 zeigt ein bevorzugtes Ausführungsbeispiel des Bereiches 4.1 des Speichers 4, in dem die Zusatzinformation gespeichert ist. Der Speicherbereich 4.1 besteht dabei aus einer Speichermatrix 32, deren Speicherplätze 34 über einen ersten und zweiten, horizontalen Eingang 32.1 und 32.2 sowie einen dritten und vierten, vertikalen Eingang 32.3 und 32.4 adressierbar sind. Der erste bzw. zweite bzw. dritte bzw. vierte Eingang 32.1 bzw. 32.2 bzw. 32.3 bzw. 32.4 ist mit der ersten bzw. zweiten bzw. dritten bzw. vierten Adreßleitung 33.1 bzw. 33.2 bzw. 33.3 bzw. 33.4 verbunden, die wiederum alle an die Hauptadreßleitung 33 angeschlossen sind. Soll die Zusatzinformation angezeigt werden, so liegt an der Hauptadreßleitung 33 ein Adreßimpuls an. Diese kann hierzu beispielsweise mit dem zu Figur 1 beschriebenen ersten Adressierer 8 verbunden sein.

Je nachdem, welcher der Speicherplätze 34 adressiert ist, wird eine dort abgelegte Zusatzinformation über den Ausgang 32.5 der Ausgangsschnittstelle 35 der Speichermatrix 32 an die Datenleitung 36 ausgegeben, welche mit dem Ausgang des Speichers 4 verbunden ist. Die Ausgangsschnittstelle ist dabei in Abhängigkeit vom Vorliegen eines Adreßimpulses an der Hauptadreßleitung 33 derart geschaltet, daß sie nur bei Vorliegen eines derartigen Adreßimpulses Informationen durchläßt. Sie ist hierzu über die Leitung 33.5 mit der Hauptadreßleitung 33 verbunden.

Die in den Speicherplätzen 34 abgelegten Zusatzinformationen bestehen aus Werbebotschaften. Sie weisen unterschiedliche Wertigkeitsniveaus auf, beispielsweise bestimmte abgestufte Angebote, die sich an den Benutzer des jeweiligen Gerätes richten. Die in dem Speicherplatz 34.1 abgelegte Zusatzinformation weist dabei das höchste Wertigkeitsniveau auf, also das "beste" Angebot, die in dem Speicherplatz 34.2 abgelegte Zusatzinformation weist das niedrigste Wertigkeitsniveau auf. In den übrigen Speicherplätzen 34 sind Zusatzinformationen abgelegt, die zwischen diesen beiden Wertigkeitsniveaus liegende Wertigkeitsniveaus aufweisen. Dabei verringert sich die Höhe des Wertigkeitsniveaus im gezeigten Beispiel von links nach rechts sowie von oben nach unten. Die in den Speicherplätzen 34 abgelegten Zusatzinformationen sind nach der Herstellung nicht mehr veränderbar. Der Speicherbereich 32 kann hierzu als feste Speichertopographie ausgebildet sein, die beispielsweise maskenprogrammiert ist.

Die Festlegung der von dem Speicherbereich 4.1 bei Vorliegen eines Adreßimpulses an der Hauptadreßleitung 33 ausgegebenen Zusatzinformation erfolgt bei der Herstellung des erfindungsgemäßen Gerätes durch Modifikation der Topographie des Speicherbereichs 4.1. Dies geschieht durch Kappen einer oder mehrerer der Adreßleitungen 33.1 bis 33.4 bzw. Belassen der Unversehrtheit dieser Adreßleitungen. Sind alle Adreßleitungen 33.1 bis 33.4 unversehrt, so wird bei Vorliegen eines Adreßimpulses an der Hauptadreßleitung 33 der Speicherplatz 34.1 adressiert. Im unbearbeiteten Ausgangszustand des Speicherbereichs 4.1 wird also bei Vorliegen eines Adreßimpulses an der Hauptadreßleitung 33 die Zusatzinformation mit dem höchsten Wertigkeitsniveau ausgegeben. Durch Kappen einer oder mehrerer der Adreßleitungen 33.1 bis 33.4 kann das Wertigkeitsniveau der tatsächlich bei Vorliegen eines Adreßimpulses an der Hauptadreßleitung 33 ausgegebenen Zusatzinformation sukzessive reduziert werden. Wurden beispielsweise alle Adreßleitungen 33.1 bis 33.4 bei der Herstellung zerstört, so wird bei Vorliegen eines Adreßimpulses an der Hauptadreßleitung 33 der Speicherplatz 34.2 adressiert, der die Zusatzinformation mit dem geringsten Wertigkeitsniveau enthält.

Die Festlegung der von dem Speicherbereich 4.1 bei Vorliegen eines Adreßimpulses an der Hauptadreßleitung 33 ausgegebenen Zusatzinformation erfolgt also bei der Herstellung des erfindungsgemäßen Gerätes irreversibel durch ggf. Zerstörung einer oder mehrerer Adreßleitungen 33.1 bis 33.4. Dies kann beispielsweise durch eine entsprechende Laserbearbeitung der Speichertopographie geschehen. Hierdurch werden eventuelle Betrugsmöglichkeiten durch Manipulation des Speicherbereiches 4.1 ausgeschlossen. Selbst wenn es möglich wäre, einzelne zuvor gekappte Adreßleitungen 33.1 bis 33.4 wiederherzustellen, so wäre eine derartige Reparatur und damit die Manipulation doch zumindest erkennbar.

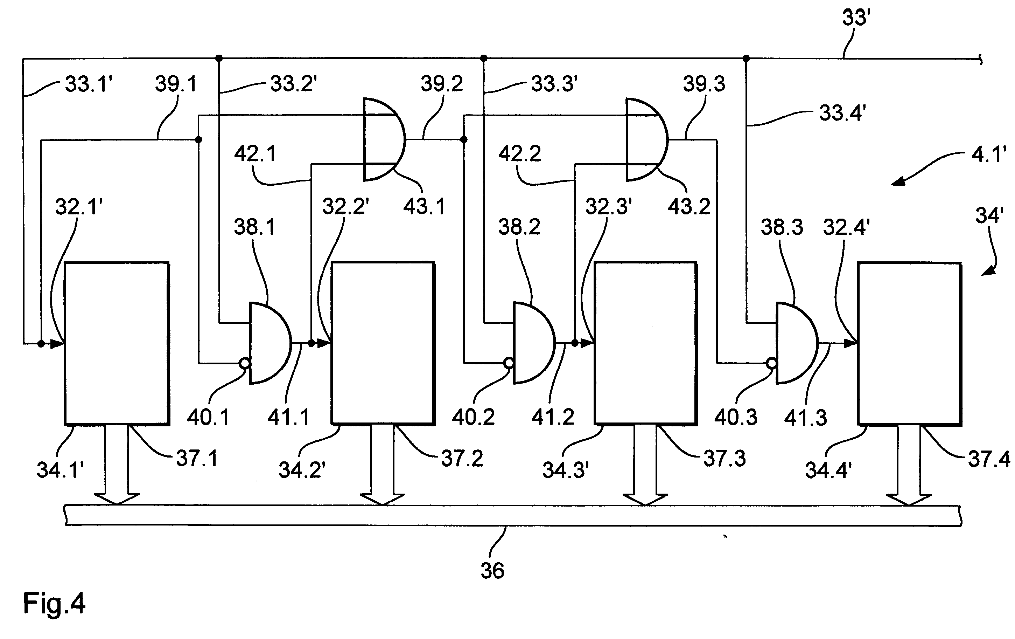

Figur 4 zeigt ein anderes bevorzugtes Ausführungsbeispiel des Bereiches des Speichers 4, in dem die Zusatzinformation gespeichert ist. Der Speicherbereich 4.1' besteht dabei aus Speicherplätzen 34.1' bis 34.4', deren Eingänge 32.1' bis 32.4' über einzelne Adreßleitungen 33.1' bis 33.4' in bestimmter, weiter unten beschriebener Weise adressierbar sind. Die Adreßleitungen 33.1' bis 33.4' sind wiederum alle an die Hauptadreßleitung 33' angeschlossen. Soll die Zusatzinformation angezeigt werden, so liegt an der Hauptadreßleitung 33' ein Adreßimpuls an. Diese kann hierzu beispielsweise mit dem zu Figur 1 beschriebenen ersten Adressierer 8 verbunden sein.

Die in den Speicherplätzen 34' abgelegten Zusatzinformationen weisen unterschiedliche Wertigkeitsniveaus auf. Die in dem Speicherplatz 34.1' abgelegte Zusatzinformation weist dabei das höchste Wertigkeitsniveau auf, die in dem Speicherplatz 34.4' abgelegte Zusatzinformation weist dabei das niedrigste Wertigkeitsniveau. In den übrigen Speicherplätzen 34.2' und 34.3' sind Zusatzinformationen abgelegt, die zwischen diesen beiden Wertigkeitsniveaus liegende Wertigkeitsniveaus aufweisen. Dabei verringert sich die Höhe des Wertigkeitsniveaus im gezeigten Beispiel von links nach rechts. Die in den Speicherplätzen 34' abgelegten Zusatzinformationen sind nach der Herstellung des Speicherbereiches 4.1' nicht mehr veränderbar. Der Speicherbereich 4.1' kann hierzu als feste Speichertopographie ausgebildet sein, die beispielsweise maskenprogrammiert ist.

Die in dem jeweils adressierten Speicherplatz abgelegte Zusatzinformation wird bei Anliegen eines Adreßimpulses am Adreßeingang des Speicherplatzes über seinen Ausgang 37.1 bzw. 37.2 bzw. 37.3 bzw. 37.4 an die Datenleitung abgegeben, die mit dem Ausgang des Speichers 4 verbunden ist. Die Adreßleitungen 33.1' bis 33.4' der Speicherplätze 34.1' bis 34.4' sind dabei in einer Weise miteinander verschaltet, die sicherstellt, daß jeweils nur immer einer der Speicherplätze 34.1' bis 34.4' adressiert wird. Diese Verschaltung wird im folgenden beschrieben. Die dem Speicherplatz 34.2' zugeordnete Adreßleitung 33.2' ist über eine UND-Schaltung 38.1 mit der Leitung 39.1 verknüpft durch die Leitung 41.1 mit dem Adreßeingang 32.2' des Speicherplatzes 34.2' verbunden. Die Leitung 39.1 ist dabei mit der dem Speicherplatz 34.1' zugeordneten Adreßleitung 33.1' verbunden, welche wiederum am Adreßeingang 32.1' des Speicherplatzes 34.1' anliegt. Die UND-Schaltung 38.1 weist dabei am Anschluß der Leitung 39.1 einen invertierenden Eingang 40.1 auf.

Die Leitung 39.1 ist über eine ODER-Schaltung 43.1 mit einer Leitung 42.1 verknüpft durch die Leitung 39.2 mit dem invertierenden Eingang 40.2 einer UND-Schaltung 38.2 verbunden. Über die UND-Schaltung 38.2 ist wiederum die dem Speicherplatz 34.3' zugeordnete Adreßleitung 33.3' ist mit der Leitung 39.2 verknüpft. Der Ausgang der UND-Schaltung 38.2 ist dann durch die Leitung 41.2 mit dem Adreßeingang des Speicherplatzes mit dem nächstniedrigeren Wertigkeitsniveau verbunden, also mit dem Adreßeingang 32.3' des Speicherplatzes 34.3'.

Die Leitung 39.2 ist über eine ODER-Schaltung 43.2 mit einer Leitung 42.2 verknüpft durch die Leitung 39.3 mit dem invertierenden Eingang 40.3 einer UND-Schaltung 38.3 verbunden. Über die UND-Schaltung 38.3 ist wiederum die dem Speicherplatz 34.4' zugeordnete Adreßleitung 33.4' mit der Leitung 39.3 verknüpft. Der Ausgang der UND-Schaltung 38.3' ist dann durch die Leitung 41.3 mit dem Adreßeingang des Speicherplatzes mit dem nächstniedrigeren Wertigkeitsniveau verbunden, also mit dem Adreßeingang 32.4' des Speicherplatzes 34.4'.

Liegt an der Hauptadreßleitung 33' ein Adreßimpuls an, so liegt am Adreßeingang 32.1' des Speicherplatzes 34.1' ein Adreßimpuls an, während durch die beschriebene Verschaltung der Adreßleitungen sichergestellt ist, daß an den Adreßeingängen der übrigen Speicherplätze mit niedrigerem Wertigkeitsniveau, also an den Adreßeingängen der übrigen Speicherplätze 34.2' bis 34.4' kein Adreßimpuls anliegt.

Die Festlegung der von dem Speicherbereich 4.1' bei Vorliegen eines Adreßimpulses an der Hauptadreßleitung 33' ausgegebenen Zusatzinformation erfolgt bei der Herstellung des erfindungsgemäßen Gerätes durch Modifikation der Topographie des Speicherbereichs 4.1'. Dies geschieht durch Kappen einer oder mehrerer der Adreßleitungen 33.1' bis 33.4' bzw. Belassen der Unversehrtheit dieser Adreßleitungen. Sind alle Adreßleitungen 33.1' bis 33.4' unversehrt, so wird bei Vorliegen eines Adreßimpulses an der Hauptadreßleitung 33' der Speicherplatz 34.1' adressiert. Im unbearbeiteten Ausgangszustand des Speicherbereichs 4.1' wird also bei Vorliegen eines Adreßimpulses an der Hauptadreßleitung 33' die Zusatzinformation mit dem höchsten Wertigkeitsniveau ausgegeben. Durch Kappen der Adreßleitungen 33.1' bis 33.4' kann das Wertigkeitsniveau der tatsächlich bei Vorliegen eines Adreßimpulses an der Hauptadreßleitung 33' ausgegebenen Zusatzinformation sukzessive reduziert werden. Wurden beispielsweise alle den Speicherplätzen mit höheren Wertigkeitsniveaus zugeordneten Adreßleitungen bei der Herstellung zerstört, so wird bei Vorliegen eines Adreßimpulses an der Hauptadreßleitung 33' der Speicherplatz mit dem höchsten Wertigkeitsniveau adressiert, dessen zugeordnete Adreßleitung unversehrt ist.

Die Festlegung der von dem Speicherbereich 4.1' bei Vorliegen eines Adreßimpulses an der Hauptadreßleitung 33' ausgegebenen Zusatzinformation erfolgt also bei der Herstellung des erfindungsgemäßen Gerätes irreversibel durch ggf. Zerstörung einer oder mehrerer Adreßleitungen 33.1' bis 33.4'. Dies kann beispielsweise durch eine entsprechende Laserbearbeitung der Speichertopographie geschehen. Hierdurch werden eventuelle Betrugsmöglichkeiten durch Manipulation des Speicherbereiches 4.1' ausgeschlossen. Selbst wenn es möglich wäre, einzelne zuvor gekappte Adreßleitungen 33.1' bis 33.4' wiederherzustellen, so wäre eine derartige Reparatur und damit die Manipulation doch zumindest erkennbar.

Es versteht sich, daß die zu den Figuren 3 und 4 beschriebenen Zusatzinformationen nicht notwendigerweise unterschiedliche Wertigkeitsniveaus aufweisen müssen. Es ist beispielsweise auch möglich, daß die in dem Speicherbereich abgelegten Zusatzinformationen speziell auf unterschiedliche Abnehmer des Gerätes abgestimmte Informationen enthalten und dann bei der Herstellung des Gerätes in Abhängigkeit von dem jeweiligen Abnehmer des Gerätes der entsprechende tatsächlich adressierte Speicherplatz 34 bzw. 34' bestimmt wird. Die Herstellung von Geräten mit abnehmerspezifischen Zusatzinformationen kann dadurch wesentlich rationalisiert werden.

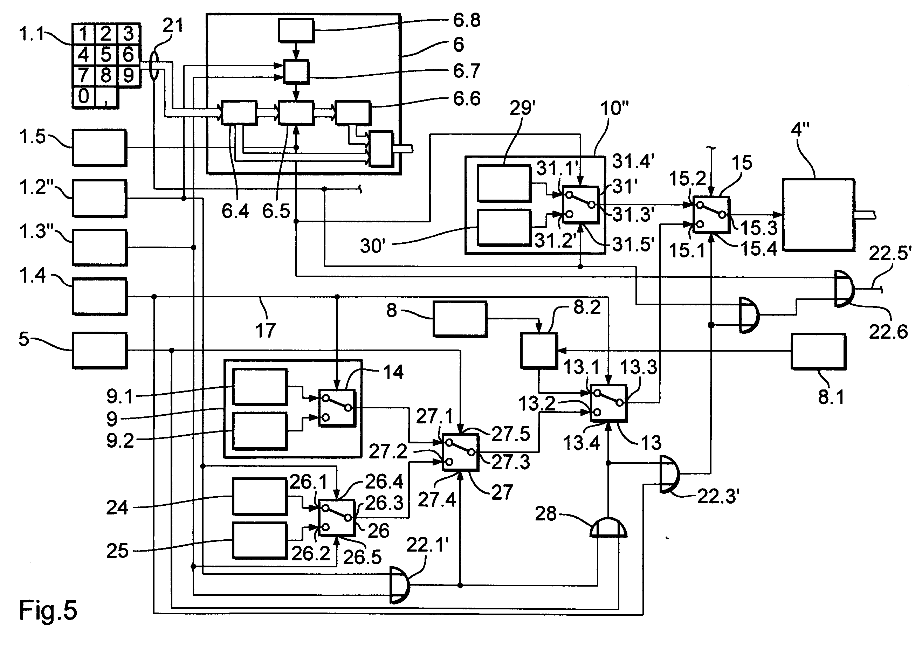

Figur 5 zeigt ein Blockschaltbild einer weiteren Ausführung der Erfindung, die im wesentlichen mit der Ausführung aus Figur 2 übereinstimmt. Aufgrund dieser weitgehenden Übereinstimmung sollen hier lediglich die Unterschiede beschrieben werden.

Die gezeigte Umrechnungsbaugruppe 6 entspricht dabei einer der Baugruppen zur Durchführung der Währungsumrechnung, die in der von derselben Anmelderin eingereichten deutschen Patentanmeldung mit dem Aktenzeichen 194 25 924.3 offenbart sind. Sie umfaßt einen mit der Tastatur 1.1 verbundenen Eingangspufferspeicher 6.4, eine mit dem Eingangspufferspeicher 6.4 verbundene Recheneinheit 6.5, einen mit der Recheneinheit 6.5 verbundenen Ausgangspufferspeicher 6.6 sowie einen über eine Auswahlschaltung 6.7 mit der Recheneinheit 6.6 verbundenen Konstantenspeicher 6.8. Sowohl der Eingangspufferspeicher 6.4 als auch der Ausgangspufferspeicher 6.6 sind mit der Ausgabesteuerung verbunden.

Weiterhin ist ein Betätigungselement 1.5 zum Starten des Umrechnungsvorgangs vorgesehen, das mit der Recheneinheit 6.5 verbunden ist. Die Recheneinheit 6.5 greift gesteuert von der Betätigungseinheit 1.5 über die mit den Ausgängen der ersten und zweiten Auswahleinrichtung 1.2'' und 1.3'' verbundene Auswahlschaltung 6.7, in Abhängigkeit vom Zustand der Auswahlschaltung 6.7 auf eine in dem Konstantenspeicher 6.8 vorhandene erste Umrechnungskonstante (C₁) oder zweite Umrechnungskonstante (C₂) zu, wobei die zweite Umrechnungskonstante den Kehrwert der ersten bildet, multipliziert den Inhalt des Eingangspufferspeichers 6.4 mit dieser Umrechnungskonstante (C₁, C₂) und legt den Ergebniswert im Ausgangspufferspeicher 6.6 ab.

Ein Unterschied zu der in Figur 2 gezeigten Ausführung liegt darin, daß die Zeitsteuerung die Ausgabe von Zustandsinformationen steuert. In Abhängigkeit vom Betriebszustand der Umrechnungsbaugruppe 6 erfolgt, analog der zu Figur 2 beschrieben Weise, nach Ablauf einer bestimmten Zeitspanne ohne Betätigung der Initialisierungseinrichtung 5 oder der Eingabeeinrichtungen 1 auf dem Ausgabedisplay die Darstellung von Zustandsinformationen, die eine Bedienungshinweise für den Benutzer enthalten.

Hierzu umfaßt der vierte Adressierer 10'' eine erste und zweite Adressiereinheit 29' und 30' sowie einen sechsten Umschalter 31'. Der Ausgang der ersten bzw. zweiten Adressiereinheit 29' bzw. 30' ist mit dem ersten bzw. zweiten Eingang 31.1' bzw. 31.2' des sechsten Umschalters 31' verbunden. Der Ausgang 31.3' des sechsten Umschalters 31' bildet den Ausgang des vierten Adressierers 10'' und liegt am zweiten Eingang 15.2 des dritten Umschalters 15 an. Ist die erste Adressiereinheit 29' mit dem Informationsspeicher 4'' verbunden, so wird bei entsprechender Schaltung der Steuerbaugruppe 12 die erste Zustandsinformation auf dem Ausgabedisplay dargestellt, die einen Hinweis darauf enthalten, daß die Zahleneingabe über die Tastatur 1.1 noch zu vervollständigen ist bzw. die Umrechnung durch das Betätigungselement auszulösen ist. Ist hingegen die zweite Adressiereinheit 30' mit dem Informationsspeicher 4'' verbunden, so wird die zweite Zustandsinformation auf dem Ausgabedisplay dargestellt, die einen Hinweis darauf enthält, daß für eine neue Umrechnung eine neue Zahl über die Tastatur einzugeben ist.

Hierzu ist der erste Schalteingang 31.4' des sechsten Umschalters 31' mit dem Ausgang der Betätigungseinrichtung 1.5 verbunden. Der zweite Schalteingang 31.5' des sechsten Umschalters 31' ist mit dem Ausgang der Mittel 21 zur Erfassung einer Betätigung der Tastatur 1.1 verbunden. Wird das Betätigungselement 1.5 betätigt, so verbindet der sechste Umschalter 31' seinen ersten Eingang 31.1' mit seinem Ausgang 31.3'. Wird hingegen die Tastatur 1.1 betätigt, so bewirken die Mittel 21 zur Erfassung einer Betätigung der Tastatur 1.1 eine Verbindung des zweiten Eingangs 31.2' mit dem Ausgang 31.3' des sechsten Umschalters 31'.

Zum Zurücksetzen der Zeitsteuerung durch eine Betätigung des Betätigungselements 1.5 ist der Ausgang des Betätigungselements 1.5 zudem noch über eine ODER-Schaltung 22.6 mit den übrigen Elementen der Eingabeeinrichtung verknüpft mit der Leitung 22.5' zum Rücksetzeingang des Zählers der Zeitsteuerung verbunden.

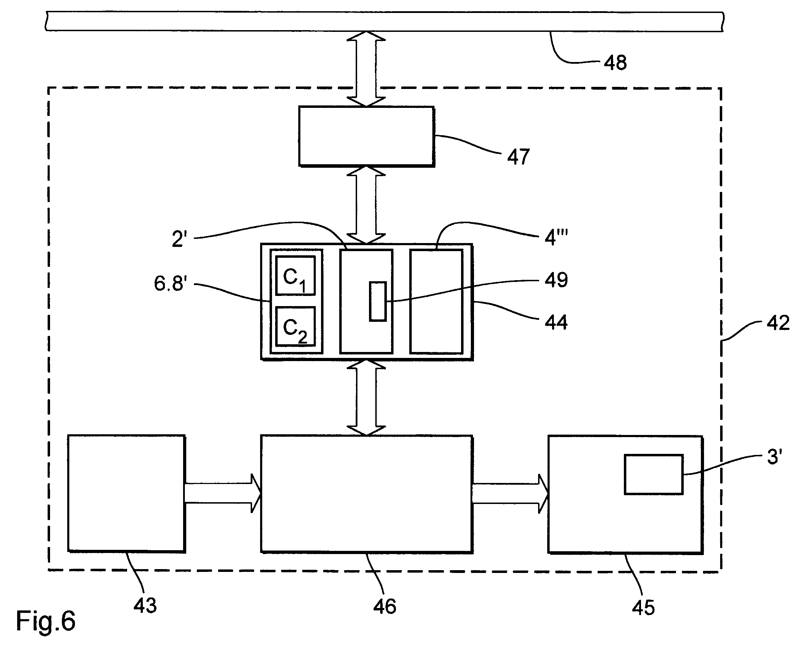

Figur 6 zeigt eine weitere Ausführung der vorliegenden Erfindung, die in ihren Elementen und Funktionen einem der oben beschriebenen Ausführungsbeispiele entspricht, so daß hier lediglich auf die besondere Ausgestaltung der einzelnen Elemente und Unterschiede zu den beschriebenen Ausführungsbeispielen eingegangen werden soll.

Der erfindungsgemäße Kalkulator ist von einer Datenverarbeitungsanlage 42 gebildet, die eine mit einer Eingabevorrichtung 43, einem Datenspeicher 44 und einer Ausgabevorrichtung 45 verbundene zentrale Verarbeitungsvorrichtung 46 umfaßt. Die Ausgabevorrichtung 45 bildet dabei das Ausgabedisplay 3' des Kalkulators. Der Datenspeicher 44 umfaßt den Informationsspeicher 4'''. Die Elemente der Verarbeitungseinheit sind in Form wenigstens eines Datenverarbeitungsprogrammes 2' im Datenspeicher 44 gespeichert. Zur Ausführung der oben zu den übrigen Ausführungsbeispielen beschriebenen Funktionen der Verarbeitungseinheit 2' greift die zentrale Verarbeitungsvorrichtung 46 dann auf das Datenverarbeitungsprogramm 2' zu.

Die Eingabevorrichtung 43 umfaßt dabei eine entsprechende Tastatur, die die Eingabeeinrichtungen 1 und die Initialisierungseinrichtung 5 im Sinne der oben beschriebenen Ausführungsbeispiele bildet. Es versteht sich jedoch, daß Teile oder auch die gesamten Eingabeeinrichtungen 1 und die Initialisierungseinrichtung 5 im Sinne der oben beschriebenen Ausführungsbeispiele als entsprechende Bedienfelder ausgeführt sein können, die durch entsprechende im Datenspeicher 44 gespeicherte Programme auf der Ausgabevorrichtung 45 dargestellt sein können. Die Betätigung der Eingabeeinrichtungen 1 und/oder der Initialisierungseinrichtung 5 erfolgt dann in bekannter Weise mit einer Maus o. ä. oder, falls die Ausgabevorrichtung 45 ein berührungsempfindlicher Bildschirm ist, mit den Fingern oder einem entsprechenden Eingabestift.

Die Funktionen des Kalkulators werden hierdurch softwaremäßig, d. h. in Form eines Datenverarbeitungsprogrammes realisiert, so daß der Kalkulator auch in Verbindung mit beliebigen elektronischen Datenverarbeitungsgeräten 42, beispielsweise Personalcomputern, elektronischen Taschendatenbanken etc., einsetzbar ist, sofern diese nur die Möglichkeit besitzen das Datenverarbeitungsprogramm 2' in ihrem Datenspeicher 44 zu speichern.

Die Datenverarbeitungsanlage 42 weist eine Schnittstelle 47 auf, über die der Datenspeicher 44 mit einem Datennetz- oder Datenfunksystem 48 verbunden ist. Die im Datenspeicher 44 gehaltenen Informationen können gesteuert von der zentralen Verarbeitungsvorrichtung 46 durch über das Datennetz- oder Datenfunksystem 48 abrufbare Informationen ersetzt werden. So ist in einfacher Weise eine ständige Aktualisierung des Inhaltes des Datenspeichers 44 möglich. Bei dem Datennetz- oder Datenfunksystem 48 handelt es sich dabei um ein beliebiges Rechnernetz, wie insbesondere das Internet. Zu den ersetzbaren Informationen gehören dabei die im Informationsspeicher 4''' gehaltenen Informationen, die keinen Hinweis über den Zustand der Baugruppe zur Durchführung der Umrechnung bilden. Die in Abhängigkeit vom Zustand der Baugruppe ausgegebenen Bedienungsinformationen bleiben im gezeigten Beispiel daher unverändert, während die weiteren Informationen, beispielsweise Werbebotschaften oder dergleichen, die zwischen den Bedienungshinweisen auf dem Ausgabedisplay ausgegeben werden aktualisiert werden können.

Zusätzlich sind die in dem Bereich des Datenspeichers 44, der den Konstantenspeicher 6.8 bildet, gehaltenen Umrechnungskonstanten (C₁, C₂) ersetzbar. So kann in einfacher Weise über das Datennetz- oder Datenfunksystem 48 der aktuelle Umrechnungskurs zwischen zwei Devisen, zwischen denen umgerechnet werden soll, importiert werden.

Das Datenverarbeitungsprogramm 2' ist über das Datennetzoder Datenfunksystem 48 abrufbar, wobei es als Java-Applet programmiert ist, so daß es von anderen Benutzern mittels einer an das Datennetz- oder Datenfunksystem 48 angeschlossenen Datenverarbeitungseinrichtung unabhängig von deren Betriebssystem genutzt werden kann.

Das Datenverarbeitungsprogramm 2' weist ein Unterprogramm 49 auf, das gesteuert von der zentralen Verarbeitungsvorrichtung 46 nach Art eines Filters auf zu Dateien zusammengefaßte Speicherbereiche im Datenspeicher 44 zugreift und die darin gehaltenen Informationen mit dem Format der ersten bzw. zweiten Währung vergleicht, zwischen denen umgerechnet werden soll. Entspricht der Inhalt eines Speicherbereichs der jeweiligen Datei dem Format der ersten bzw. zweiten Währung, so überträgt das Unterprogramm 49 den Inhalt des Speicherbereichs in den Eingangspufferspeicher 6.4' der Verarbeitungseinheit 2', wobei es die Auswahlschaltung 6.7' der Verarbeitungseinheit 2'entsprechend dem Format des Speicherbereichs schaltet, d. h. die entsprechende Umrechnungsrichtung festlegt. Der Inhalt des Speicherbereichs wird dann durch den Inhalt des Ausgangspufferspeichers 6.6' ersetzt. Mit diesem Unterprogramm 49 ist es möglich, eine Datei nach darin abgelegten Zahlenwerten, beispielsweise eines bestimmten Währungsformates abzusuchen, diese in eine Zielwährung umzurechnen und dann den Ausgangswert durch den Zahlenwert in der Zielwährung, einschließlich des entsprechenden Zielwährungsformates in der Datei zu ersetzen.

Die Informationsspeichermittel des im Vorstehenden beschriebenen Kalkulators können insbesondere als Festwertspeicher, vorzugsweise als EPROMs ausgebildet sein, welche entweder bei der Herstellung einmalig mit Informationen geladen werden oder aber über externe Mittel (Funk- oder Datennetz) aktualisierbar sind. Ein Teil der Meldungen kann auch zusätzlich nach dem Zufalls- oder Pseudozufallsprinzip bzw. auch nach einem Zeitkriterium abrufbar sein, so daß eine gemäß der Erfindung abzurufende Information auch eine Information aus einer Menge einer bestimmten Situation zugeordneten Informationen sein kann.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Kalkulator, insbesondere mit festen Multiplikatoren, mit einer Initialisierungseinrichtung (5) zum Einschalten des Gerätes oder Setzen in einen Ausgangszustand sowie Eingabeeinrichtungen (1), einer damit verbundenen Verarbeitungseinheit (2) zur Verarbeitung der Eingabesignale und Steuerung der Ausgabe mittels eines mit der Verarbeitungseinheit (2) verbundenen Ausgabedisplays (3) und einem mit der Verarbeitungseinheit (2) verbundenen Informationsspeicher (4, 4', 4''),
wobei die Verarbeitungseinheit (2) eine mit den Eingabeeinrichtungen (1) verbundene Baugruppe (6) zur Durchführung von Berechnungen und eine damit verbundene Ausgabesteuerung (2.1) umfaßt, die sowohl mit dem Informationsspeicher (4, 4', 4'') als auch mit dem Ausgabedisplay (3) verbunden ist,
**dadurch gekennzeichnet,**
daß die Initialisierungseinrichtung (5) mit der Ausgabesteuerung (2.1) verbundene Mittel zur Erfassung einer Betätigung der Initialisierungseinrichtung (5) oder gleichwertige Mittel umfaßt und die Eingabeeinrichtungen (1) mit der Ausgabesteuerung (2.1) verbundene Mittel zu Erfassung einer Betätigung der Eingabeeinrichtungen (1) aufweisen,
daß die Ausgabesteuerung (2.1) in Abhängigkeit vom Zustand der Mittel zur Erfassung einer Betätigung der Eingabeeinrichtungen (1) und der Mittel zur Erfassung einer Betätigung der Initialisierungseinrichtung (5) die Baugruppe (6) oder den Informationsspeicher (4, 4', 4'') mit dem Ausgabedisplay (3) verbindet,
wobei die Ausgabesteuerung (2.1) bei Betätigung der Initialisierungseinrichtung (5) den Informationsspeicher (4, 4', 4'') mit dem Ausgabedisplay (3) verbindet und eine entsprechende im Informationsspeicher (4, 4', 4'') gehaltene Information auf dem Ausgabedisplay (3) darstellt, und
daß die Ausgabesteuerung (2.1) eine Zeitsteuerung (11) umfaßt, die mit den Mitteln zu Erfassung einer Betätigung der Eingabeeinrichtungen (1) und den Mitteln zur Erfassung einer Betätigung der Initialisierungseinrichtung (5) sowie mit der Baugruppe (6) verbunden ist und derart ausgebildet ist, daß die Ausgabesteuerung (2.1) nach Ablauf einer vorgebbaren Zeitspanne seit der letzten Betätigung der Eingabeeinrichtungen (1) oder der Initialisierungseinrichtung (5) gesteuert von der Zeitsteuerung (11) den Informationsspeicher (4, 4', 4'') mit dem Ausgabedisplay (3) verbindet und in Abhängigkeit vom Zustand der Baugruppe (6) in dem Informationsspeicher (4, 4', 4'') gehaltene Informationen auf dem Ausgabedisplay (3) darstellt.

2. Kalkulator nach Anspruch 1, **dadurch gekennzeichnet,** daß die Baugruppe (6) zur Durchführung von Umrechnungen eines Geldbetrags in einer ersten Währung in eine zweite Währung bzw. umgekehrt, einen mit den Eingabeeinrichtungen (1) verbundenen Eingangspufferspeicher (6.4), eine mit dem Eingangspufferspeicher (6.4) verbundene Recheneinheit (6.5), einen mit der Recheneinheit (6.5) verbundenen Ausgangspufferspeicher (6.6) sowie einen mit der Recheneinheit (6.5) verbundenen Konstantenspeicher (6.8) umfaßt,
wobei sowohl der Eingangspufferspeicher (6.4) als auch der Ausgangspufferspeicher (6.6) mit der Ausgabesteuerung (2.1) verbunden ist,
daß die Eingabeeinrichtungen (1) eine mit dem Eingangspufferspeicher (6.4) verbundene Zahlentastatur (1.1), ein Betätigungselement (1.5) zum Starten des Umrechnungsvorgangs und mindestens eine Auswahleinrichtung (1.2', 1.3') zur Auswahl der Umrechnungsrichtung von der ersten Währung in die zweite bzw. umgekehrt umfassen, und
daß die Recheneinheit (6.5) gesteuert von der Betätigungseinheit (1.5) über eine mit dem Ausgang der Auswahleinrichtung (1.2', 1.3') verbundene Auswahlschaltung (6.7), in Abhängigkeit vom Zustand der Auswahlschaltung (6.7) auf eine in dem Konstantenspeicher (6.8) vorhandene erste Umrechnungskonstante (C₁) oder zweite Umrechnungskonstante (C₂) zugreift, wobei die zweite Umrechnungskonstante den Kehrwert der ersten bildet, den Inhalt des Eingangspufferspeichers (6.4) mit dieser Umrechnungskonstante (C₁, C₂) multipliziert und den Ergebniswert im Ausgangspufferspeicher (6.6) ablegt.

3. Kalkulator nach Anspruch 2, **dadurch gekennzeichnet,** daß die Mittel zu Erfassung einer Betätigung der Eingabeeinrichtungen (1) eine Einrichtung (21) zur Erfassung einer Betätigung der Zahlentastatur (1.1) umfassen,
daß die Zeitsteuerung (11) wenigstens mit der Einrichtung (21) zur Erfassung einer Betätigung der Zahlentastatur (1.1) und dem Betätigungselement (1.5) verbunden ist und
daß die Ausgabesteuerung (2.1) gesteuert von der Zeitsteuerung (11) in Abhängigkeit von einer Betätigung der Zahlentastatur (1.1) bzw. des Betätigungselements (1.5) entsprechende in dem Informationsspeicher (4, 4', 4'') gehaltene Informationen auf dem Ausgabedisplay (3) darstellt.

4. Kalkulator nach Anspruch 3, **dadurch gekennzeichnet,** daß die Zeitsteuerung einen Zähler (11) umfaßt, dessen Rücksetzeingang (11.2) zum Rücksetzen des Zählers (11) bei jeder Betätigung der Initialisierungseinrichtung (5) oder der Eingabeeinrichtungen (1) mit den Mitteln zur Erfassung einer Betätigung der Eingabeeinrichtungen (1) und den Mitteln zur Erfassung einer Betätigung der Initialisierungseinrichtung (5) verbunden ist und der derart ausgebildet ist, daß die Zeitspanne durch Auswahl einer bestimmten Anzahl von Zählschritten vorgebbar ist.

5. Kalkulator nach einem der Ansprüche 2 bis 4, **dadurch gekennzeichnet,** daß die Einrichtung (21) zur Erfassung einer Betätigung der Zahlentastatur (1.1) derart mit der Ausgabesteuerung (2.1) verbunden und ausgebildet ist, daß die Ausgabesteuerung (2.1) bei Betätigung der Zahlentastatur (1.1) die Baugruppe (6) mit dem Ausgabedisplay (3) verbindet.

6. Kalkulator nach Anspruch 2 oder 3, **dadurch gekennzeichnet,** daß die Mittel zu Erfassung einer Betätigung der Eingabeeinrichtungen (1) eine Einrichtung zur Erfassung einer Betätigung der Auswahleinrichtung (1.2', 1.3') umfassen,
die derart mit der Ausgabesteuerung (2.1) verbunden und ausgebildet sind, daß die Ausgabesteuerung (2.1) bei Betätigung der Auswahleinrichtung (1.2', 1.3') die Baugruppe (6) mit dem Ausgabedisplay (3) verbindet,
oder
die derart mit der Ausgabesteuerung (2.1) verbunden und ausgebildet sind, daß die Ausgabesteuerung (2.1) bei Betätigung der Auswahleinrichtung (1.2', 1.3') den Informationsspeicher (4, 4', 4'') mit dem Ausgabedisplay (3) verbindet und wenigstens eine der ausgewählten Umrechnungsrichtung entsprechende, in dem Informationsspeicher (4, 4', 4'') gehaltene erste oder zweite Information auf dem Ausgabedisplay (3) darstellt.

7. Kalkulator nach einem der vorhergehenden Ansprüche, **dadurch gekennzeichnet,** daß das Ausgabedisplay (3) als Matrix-Display zur Ausgabe von Textbotschaften ausgebildet ist.

8. Kalkulator nach einem der vorhergehenden Ansprüche, **dadurch gekennzeichnet,** daß die Ausgabesteuerung (2.1) zur Darstellung der in dem Informationsspeicher (4, 4', 4'') enthaltenen, einer erfolgten Betätigung der Initialisierungseinrichtung (5) entsprechenden Information auf dem Ausgabedisplay (3) erste Adressiereinrichtungen (9) umfaßt, die über einen Umschalter (13), der einen ersten und zweiten Eingang (13.1, 13.2) und einen Ausgang (13.3) sowie wenigstens einen ersten Schalteingang (13.4) aufweist, mit dem Informationsspeicher (4, 4', 4'') verbindbar sind und bei Verbindung mit dem Informationsspeicher (4, 4', 4'') die entsprechende Information auf dem Ausgabedisplay (3) darstellen,
wobei der erste Schalteingang (13.4) des Umschalters (13) mit den Mitteln zur Erfassung einer Betätigung der Initialisierungseinrichtung (5) verbunden ist und der Umschalter (13) derart ausgebildet ist, daß bei Betätigung der Initialisierungseinrichtung (5) der Eingang des Umschalters (13), mit dem der Ausgang der ersten Adressiereinrichtungen (9) verbunden ist, mit dem Ausgang des Umschalters (13.3) verbunden ist.

9. Kalkulator nach einem der Ansprüche 4 bis 8, **dadurch gekennzeichnet,** daß die Zeitsteuerung zur Darstellung der in dem Informationsspeicher (4, 4', 4'') enthaltenen, durch die Zeitsteuerung (11) ausgelösten, dem Zustand der Baugruppe (6) entsprechenden Information auf dem Ausgabedisplay (3) zweite Adressiereinrichtungen (10'') umfaßt, die über den Umschalter (15) mit dem Informationsspeicher (4, 4', 4'') verbindbar sind und bei Verbindung mit dem Informationsspeicher (4, 4', 4'') die entsprechende Information auf dem Ausgabedisplay (3) darstellen,
wobei der Zähler (11) der Zeitsteuerung einen mit dem zweiten Schalteingang (15.5) des Umschalters (15) verbundenen Ausgang aufweist und derart ausgebildet ist, daß an dem Ausgang bei Erreichen der vorgegebenen Anzahl von Zählschritten ein Schaltimpuls anliegt, und
wobei der Umschalter (15) derart ausgebildet ist, daß bei Anliegen des Schaltimpulses am Ausgang des Zählers (11) der Eingang des Umschalters (15), mit dem Ausgang der zweiten Adressiereinrichtungen (10'') verbunden ist, mit dem Ausgang des Umschalters (15) verbunden ist.

10. Elektronisches Gerät nach Anspruch 9, **dadurch gekennzeichnet,** daß die zweiten Adressiereinrichtungen (10'') eine erste Adressiereinheit (29') und eine zweite Adressiereinheit (30') umfassen, die über einen Wahlschalter (31') mit dem Informationsspeicher (4'') verbindbar sind,
wobei der erste Schalteingang (31.4') des Wahlschalters (31') mit der Einrichtung (21) zur Erfassung einer Betätigung der Zahlentastatur (1.1) und der zweite Schalteingang (31.5') des Wahlschalters (31') mit dem Betätigungselement (1.5) verbunden ist und
wobei der Wahlschalter (31') derart ausgebildet ist, daß er in Abhängigkeit von einer Betätigung der Zahlentastatur (1.1) bzw. des Betätigungselements (1.5) zur Darstellung entsprechender im Informationsspeicher (4'') enthaltener Informationen die erste oder zweite Adressiereinheit (29', 30') mit dem Ausgang der Adressiereinrichtungen (10'') verbindet.

11. Kalkulator nach Anspruch 10, **dadurch gekennzeichnet,** daß der Wahlschalter (31') bei einer Betätigung der Zahlentastatur (1.1) die erste Adressiereinheit (29') mit dem Ausgang der Adressiereinrichtungen (10'') und bei einer Betätigung des Betätigungselements (1.5) die zweite Adressiereinheit (30') mit dem Ausgang der Adressiereinrichtungen (10'') verbindet,
wobei die Ausgabesteuerung bei Verbindung der ersten Adressiereinheit (29') mit dem Informationsspeicher (4'') auf dem Ausgabedisplay (3) eine erste Zustandsinformation ausgibt und bei Verbindung der zweiten Adressiereinheit (30') mit dem Informationsspeicher (4'') auf dem Ausgabedisplay eine zweite Zustandsinformation ausgibt.

12. Kalkulator nach Anspruch 11, **dadurch gekennzeichnet,** daß die erste Zustandsinformation einen Hinweis enthält, daß die Zahleneingabe zu vervollständigen ist oder das Betätigungselement (1.5) zu betätigen ist, um die Umrechnung zu vollziehen, und die zweite Zustandsinformation einen Hinweis enthält, daß eine neue Zahl einzugeben ist.

13. Kalkulator nach einem der vorhergehenden Ansprüche, **dadurch gekennzeichnet,** daß er von einer Datenverarbeitungsanlage (42) gebildet ist, die eine mit einer Eingabevorrichtung (43), einem Datenspeicher (44) und einer Ausgabevorrichtung (45) verbundene zentrale Verarbeitungsvorrichtung (46) umfaßt,
wobei die Ausgabevorrichtung (45) das Ausgabedisplay (3) bildet, der Datenspeicher (44) den Informationsspeicher (4, 4', 4'') umfaßt und die Elemente der Verarbeitungseinheit (2') in Form wenigstens eines Datenverarbeitungsprogrammes (2') im Datenspeicher (44) gespeichert sind, auf das die zentrale Verarbeitungsvorrichtung (46) zur Ausführung der Funktionen der Verarbeitungseinheit (2') zugreift.

14. Kalkulator nach Anspruch 13, **dadurch gekennzeichnet,** daß eine Schnittstelle (47) vorgesehen ist, über die der Datenspeicher (44) mit einem Datennetz- oder Datenfunksystem (48) verbindbar ist und der Datenspeicher (44) derart ausgebildet ist, daß die im Datenspeicher (44) gehaltenen Informationen gesteuert von der zentralen Verarbeitungsvorrichtung (46) durch über das Datennetz- oder Datenfunksystem (48) abrufbare Informationen ersetzbar oder nach einem Zufalls- oder Pseudozufallssystem aus einem mehrere entsprechende unterschiedliche Informationen enthaltenden Speicher abrufbar sind.

15. Kalkulator nach Anspruch 14, **dadurch gekennzeichnet,** daß die im Informationsspeicher (4, 4', 4'') gehaltenen Informationen, die keinen Hinweis über den Zustand der Baugruppe (6) bilden, insbesondere Werbebotschaften, und/oder die in dem Bereich des Datenspeichers (44), der den Konstantenspeicher (6.8) bildet, gehaltenen Umrechnungskonstanten (C₁, C₂) ersetzbar sind.

16. Kalkulator nach Anspruch 14 oder 15, **dadurch gekennzeichnet,** daß das Datenverarbeitungsprogramm (2') über das Datennetz- oder Datenfunksystem (48) abrufbar und nach Art eines Java- oder ActiveX-Applets ausgebildet ist.

17. Kalkulator nach einem der Ansprüche 13 bis 16, **dadurch gekennzeichnet,** daß das Datenverarbeitungsprogramm (2') wenigstens ein Unterprogramm (49) umfaßt, das derart ausgebildet ist, daß es gesteuert von der zentralen Verarbeitungsvorrichtung (46) nach Art eines Filters auf zu Dateien zusammengefaßte Speicherbereiche im Datenspeicher (44) zugreift und die darin gehaltenen Informationen mit dem Format der ersten bzw. zweiten Währung vergleicht, den Inhalt von Speicherbereichen der jeweiligen Datei, die dem Format der ersten bzw. zweiten Währung entsprechen, jeweils in den Eingangspufferspeicher (6.6) überträgt, wobei Auswahlschaltung (6.7) entsprechend dem Format des Speicherbereichs geschaltet ist, und den Inhalt des Speicherbereichs durch den Inhalt des Ausgangspufferspeichers (6.6) ersetzt.
